(19) Europäisches Patentamt / European Patent Office / Office européen des brevets

(11) **EP 4 063 895 B1**

(12) **EUROPEAN PATENT SPECIFICATION**

(45) Date of publication and mention
of the grant of the patent:
**04.03.2026 Bulletin 2026/10**

(21) Application number: **19953443.9**

(22) Date of filing: **19.11.2019**

(51) International Patent Classification (IPC):
*G01S 7/40* (2006.01)     *G01S 13/931* (2020.01)

(52) Cooperative Patent Classification (CPC):
**G01S 13/931; G01S 7/4021; G01S 7/4026;
G01S 7/4086**

(86) International application number:
**PCT/JP2019/045232**

(87) International publication number:
**WO 2021/100113 (27.05.2021 Gazette 2021/21)**

(54) **RADAR DEVICE AND CALIBRATION SYSTEM**

RADARVORRICHTUNG UND KALIBRIERUNGSSYSTEM

DISPOSITIF RADAR ET SYSTÈME D'ÉTALONNAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2022 Bulletin 2022/39**

(73) Proprietor: **OMRON Corporation
Kyoto-shi, Kyoto 600-8530 (JP)**

(72) Inventor: **TANIMOTO, Yudai
Kyoto-shi, Kyoto 600-8530 (JP)**

(74) Representative: **HGF
HGF Limited
4th Floor, 1 City Square
Leeds LS1 2ES (GB)**

(56) References cited:
EP-A1- 3 502 740      WO-A1-2011/101225
CN-A- 108 945 164     JP-A- 2007 200 045
JP-A- 2014 236 641    JP-A- 2018 179 798
JP-A- H0 784 032      JP-A- H06 230 108
US-A1- 2010 076 709   US-A1- 2019 204 427
US-B2- 8 918 302

**Description**

TECHNICAL FIELD

The present disclosure relates to a calibration system and a calibration method of a radar device, for calibrating the radar device mounted on a vehicular apparatus.

BACKGROUND ART

A vehicular apparatus (or mobile apparatus) provided with a radar device is known for detecting surrounding obstacles or the like (for example, see Patent Document 1). A radar device transmits radar waves, receives radar waves reflected by some reflecting object, and estimates the distance and the direction of the reflecting object based on the received radar waves. In order to steer the main beam direction, the radar device is provided with, for example, an array antenna device including a plurality of antenna elements.

It is known from US8918302B2 to provide a sensor calibration system for a mobile machine, and US2019/204427 discloses a facility for calibrating sensors of an autonomous vehicle. Furthermore, EP3502740A1 discloses a method for calibrating a radar transceiver, and WO2011/101225 relates to a device for measuring distance and speed for an analysis unit and to a high-frequency transmitting and receiving device. CN108945164A and JP2014236641A represent further prior art to the matter of this application.

CITATION LIST

PATENT DOCUMENTS

PATENT DOCUMENT 1: Japanese Patent Laid-open Publication No. JP 2018-059846 A

SUMMARY OF INVENTION

TECHNICAL PROBLEM

However, errors may occur in the estimated distance and direction due to a manufacturing errors of antenna elements, mutual electromagnetic coupling among antenna elements, variation in intervals among antenna elements, variation in the performance of circuit components, and the like. In order to reduce or eliminate these errors, it is necessary to calibrate the radar device.

Conventionally, radar devices are calibrated only at the time of shipment. Even if recalibration of the radar device is needed after shipment, it is not easy to recalibrate the radar device. For example, in a case where a radar device is mounted on a vehicular apparatus, an antenna device may be affected by a nearby housing of the vehicular apparatus, and therefore, characteristics of the radar device may change. In addition, in a case where a radar device mounted on a vehicular apparatus is operated for a long period of time, the radar device may deteriorate over time (e.g., a radome may deform due to scratches or dents), and therefore, characteristics of the radar device may change. In addition, due to vibration of the vehicular apparatus, the radar device may be displaced, or the housing of the radar device may be distorted, and therefore, characteristics of the radar device may change. It is necessary to recalibrate the radar device in response to these changes in the characteristics of the radar device. However, it is practically impossible to go to customers' sites and individually recalibrate the radar devices after shipment of the radar devices.

An object of the present disclosure is to provide a calibration system and a calibration method of a radar device, capable of easily calibrating the radar device with less efforts than the prior art.

SOLUTION TO PROBLEM

According to a calibration system of an aspect of the claimed invention, a calibration system of a radar device is provided with: a vehicular apparatus provided with the radar device; and a station apparatus having a predetermined stop position for the vehicular apparatus. The station apparatus is provided with at least one signal source located at a predetermined position of the station apparatus, the signal source being configured to transmit a radio signal to the radar device. The radar device is provided with: a receiver circuit, a signal processing circuit, and a control circuit. The receiver circuit is configured to receive the radio signal from the signal source and output a received signal, when the vehicular apparatus stops at the stop position of the station apparatus. The signal processing circuit is configured to estimate a distance and a direction of the signal source with respect to a position of the radar device, based on the received signal. The control circuit is configured to calibrate the receiver circuit or the signal processing circuit based on a known distance and a known direction of the signal source with respect to a position of the radar device of the vehicular apparatus stopping at the stop position of the station apparatus, so as to minimize an error between the estimated distance and the known distance, and so as to minimize an error between the estimated direction and the known direction. The station apparatus has a guide formed according to a shape of a housing of the vehicular apparatus, so that the vehicular apparatus stops at the stop position.

With this configuration, since necessary components for recalibration of the radar device are incorporated into the station apparatus, it is possible to easily calibrate the radar device with less efforts than the prior art.

According to the calibration system of the aspect of the present disclosure, the signal source is a reflector. The radar device is further provided with a transmitter circuit configured to transmit a radio signal. The receiver circuit is configured to receive the radio signal transmitted from the radar device and reflected by the reflector, when the vehicular apparatus stops at the stop position of the station apparatus.

With this configuration, it is possible to easily transmit a radio signal to the radar device and calibrate the radar device.

According to the calibration system of the aspect of the present disclosure, the signal source is a transmitter configured to generate a radio signal. The radar device is configured to receive the radio signal generated by the transmitter, when the vehicular apparatus stops at the stop position of the station apparatus.

With this configuration, it is possible to transmit a radio signal to the radar device and calibrate the radar device.

According to the calibration system of the aspect of the present disclosure, the signal source is a transceiver configured to receive a first radio signal, and transmit a second radio signal in response to the first radio signal. The radar device is further provided with a transmitter circuit configured to transmit the first radio signal, when the vehicular apparatus stops at the stop position of the station apparatus. The receiver circuit is configured to receive the second radio signal received from the transceiver in response to the first radio signal.

With this configuration, it is possible to transmit a radio signal to the radar device and calibrate the radar device.

According to the calibration system of the aspect of the present disclosure, the vehicular apparatus is provided with a rechargeable battery. The station apparatus is provided with a charger control device connected to the rechargeable battery of the vehicular apparatus to enable charging, when the vehicular apparatus stops at the stop position of the station apparatus.

With this configuration, it is possible to easily calibrate the radar device with less efforts than the prior art, every time the vehicular apparatus is charged.

According to the calibration system of the aspect of the present disclosure, the radar device is provided with an array antenna device including a plurality of antenna elements. The control circuit is configured to calibrate the signal processing circuit by calculating correction coefficients for correcting the received signals of the antenna elements using software signal processing, so as to minimize the error between the estimated distance and the known distance, and so as to minimize the error between the estimated direction and the known direction.

With this configuration, when actually detecting obstacles or the like around the vehicular apparatus using the radar device, it is possible to reduce an error of the radar device.

According to the calibration system of the aspect of the present disclosure, the radar device is further provided with an array antenna device including a plurality of antenna elements. The receiver circuit is provided with: a plurality of amplifiers each configured to amplify a received signal of each antenna element with a variable gain; and a plurality of phase shifters each configured to change a phase of the received signal of each antenna element with a variable phase shift. The control circuit is configured to calibrate the receiver circuit by calculating correction coefficients for correcting the gains of the amplifiers and the phase shifts of the phase shifters, so as to minimize the error between the estimated distance and the known distance, and so as to minimize the error between the estimated direction and the known direction.

With this configuration, when actually detecting obstacles or the like around the vehicular apparatus using the radar device, it is possible to reduce an error of the radar device.

According to the calibration system of the aspect of the present disclosure, the calibration system is provided with a plurality of signal sources located at a plurality of different positions of the station apparatus, so as to be positioned in different directions with respect to the stop position. The control circuit is configured to calculate correction coefficients for correcting the received signal for each of the plurality of signal sources, based on known distances and known directions of the signal sources with respect to a position of the radar device of the vehicular apparatus stopping at the stop position of the station apparatus, so as to minimize errors among the estimated distances and the known distances, and so as to minimize errors among the estimated directions and the known directions. The radar device is further provided with a storage device configured to store the correction coefficients in association with the directions of the signal sources. The radar device is further provided with a transmitter circuit configured to transmits a radio signal. The receiver circuit is configured to receive the radio signal transmitted from the radar device and reflected by a reflecting object, and output a received signal. The control circuit is configured to read correction coefficients associated with one of the plurality of signal sources from the storage device, and correct the received signal using the read correction coefficients. The signal processing circuit is configured to estimate a distance and a direction of the reflecting object with respect to a position of the radar device based on the corrected received signal.

With this configuration, by using a plurality of signal sources, it is possible to calibrate the radar device with higher accuracy than in the case of using one signal source.

According to the calibration method of another aspect of the claimed invention, a calibration method of a radar device includes stopping a vehicular apparatus provided with the radar device, at a predetermined stop position for a station apparatus. The method includes transmitting a radio signal from at least one signal source located at a predetermined position of the station apparatus to the radar device. The method includes receiving the radio signal and outputting a received signal by a receiver circuit of the radar device. The method includes estimating a distance and a direction of the signal source with respect to a position of the radar device, based on the received signal, by a signal processing circuit of the radar device. The method includes calibrating the receiver circuit or the signal processing circuit based on a known distance and a known direction of the signal source with respect to a position of the radar device of the vehicular apparatus stopping at the stop position of the station apparatus, so as to minimize an error between the estimated distance and the known distance, and so as to minimize an error between the estimated direction and the known direction. The station apparatus has a guide formed according to a shape of a housing of the vehicular apparatus, so that the vehicular apparatus stops at the stop position.

With this configuration, since necessary components for recalibration of the radar device are incorporated into the station apparatus, it is possible to easily calibrate the radar device with less efforts than the prior art.

ADVANTAGEOUS EFFECTS OF INVENTION

According to the calibration system of the aspect of the present disclosure, it is possible to easily calibrate a radar device with less efforts than the prior art.

BRIEF DESCRIPTION OF DRAWINGS

Fig. 1 is a side view illustrating a configuration of a calibration system according to a first embodiment.
Fig. 2 is a block diagram illustrating a configuration of a vehicular apparatus 1 of Fig. 1.
Fig. 3 is a block diagram illustrating a configuration of a radar device 12 of Fig. 2.
Fig. 4 is a block diagram illustrating a modified embodiment of the radar device 12 of Fig. 2.
Fig. 5 is a block diagram illustrating a configuration of a charger apparatus 22 of Fig. 1.
Fig. 6 is a perspective view illustrating a configuration of a reflector 24 of Fig. 1.
Fig. 7 is a perspective view illustrating a first modified embodiment of the reflector 24 of Fig. 1.
Fig. 8 is a perspective view illustrating a second modified embodiment of the reflector 24 of Fig. 1.
Fig. 9 is a side view illustrating a configuration of a calibration system including a third modified embodiment of the reflector 24 of Fig. 1.
Fig. 10 is a diagram for explaining calibration of the radar device 12 of Fig. 2.
Fig. 11 is a flowchart illustrating calibration process executed by the radar device 12 of Fig. 1.
Fig. 12 is a graph illustrating temporal changes in frequencies of a radar wave transmitted from an antenna element 32-1 and a radar wave received by an antenna element 33-1 in the radar device 12 of Fig. 3.
Fig. 13 is a graph illustrating a temporal change in frequency of an I/Q signal generated from a radar wave received by the antenna element 33-1 of Fig. 3.
Fig. 14 is a graph illustrating frequency characteristics of the I/Q signal generated from a radar wave received by the antenna element 33-1 of Fig. 3.
Fig. 15 is a flowchart illustrating radar detection process executed by the radar device 12 of Fig. 1.
Fig. 16 is a top view illustrating a configuration of a calibration system according to a first modified embodiment of the first embodiment.
Fig. 17 is a top view illustrating a configuration of a calibration system according to a second embodiment.
Fig. 18 is a flowchart illustrating calibration process executed by a radar device 12 of Fig. 17.
Fig. 19 is a flowchart illustrating radar detection process executed by the radar device 12 of Fig. 17.
Fig. 20 is a flowchart illustrating a modified embodiment of the calibration process executed by the radar device 12 of Fig. 17.
Fig. 21 is a block diagram illustrating a configuration of a radar device 12B of a calibration system according to a third embodiment.
Fig. 22 is a flowchart illustrating calibration process executed by the radar device 12B of Fig. 21.
Fig. 23 is a flowchart illustrating radar detection process executed by the radar device 12B of Fig. 21.
Fig. 24 is a side view illustrating a configuration of a calibration system according to a fourth embodiment.

Fig. 25 is a flowchart illustrating calibration process executed by a radar device 12 of Fig. 24.
Fig. 26 is a side view illustrating a configuration of a calibration system according to a fifth embodiment.
Fig. 27 is a flowchart illustrating calibration process executed by a radar device 12 of Fig. 26.
Fig. 28 is a side view illustrating a configuration of a calibration system according to a sixth embodiment.

DESCRIPTION OF EMBODIMENTS

[APPLICATION EXAMPLE]

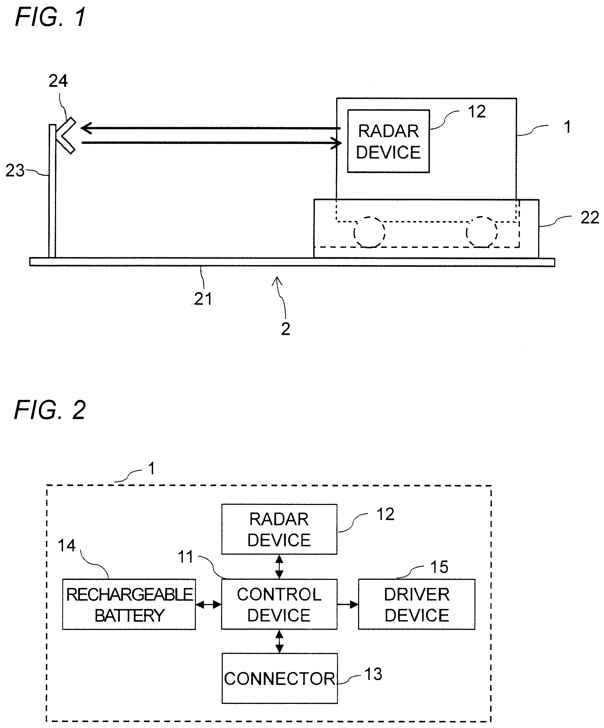

Fig. 1 is a side view illustrating a configuration of a calibration system according to a first embodiment. The calibration system of Fig. 1 is provided with a vehicular apparatus 1 and a station apparatus 2.

The vehicular apparatus 1 is, for example, an autonomous vehicle referred to as an automatic guided vehicle (AGV) or an autonomous intelligent vehicle (AIV). The vehicular apparatus 1 is provided with a radar device 12. Using the radar device 12. the vehicular apparatus 1 detects obstacles or the like around the vehicular apparatus 1.

The station apparatus 2 has a predetermined stop position for the vehicular apparatus 1. The station apparatus 2 has, according to the invention, a guide formed according to the shape of a housing of the vehicular apparatus 1, so that the vehicular apparatus 1 correctly stops at the stop position. The station apparatus 2 may include, for example, a charger apparatus 22. In this case, the stop position of the station apparatus 2 is set to a position where the vehicular apparatus 1 is coupled to the charger apparatus 22 so that power can be transmitted from the charger apparatus 22 to the vehicular apparatus 1.

The station apparatus 2 is provided with at least one reflector 24 located at a predetermined position of the station apparatus 2, the reflector 24 being configured to transmit radio signals to the radar device 12. When the vehicular apparatus 1 stops at the stop position of the station apparatus 2, the reflector 24 is located at a predetermined position as seen from the radar device 12.

The reflector 24 is an example of a signal source for transmitting radio signals to the radar device 12. As a signal source, the calibration system may be provided with a transmitter or a transceiver instead of the reflector 24, as described below.

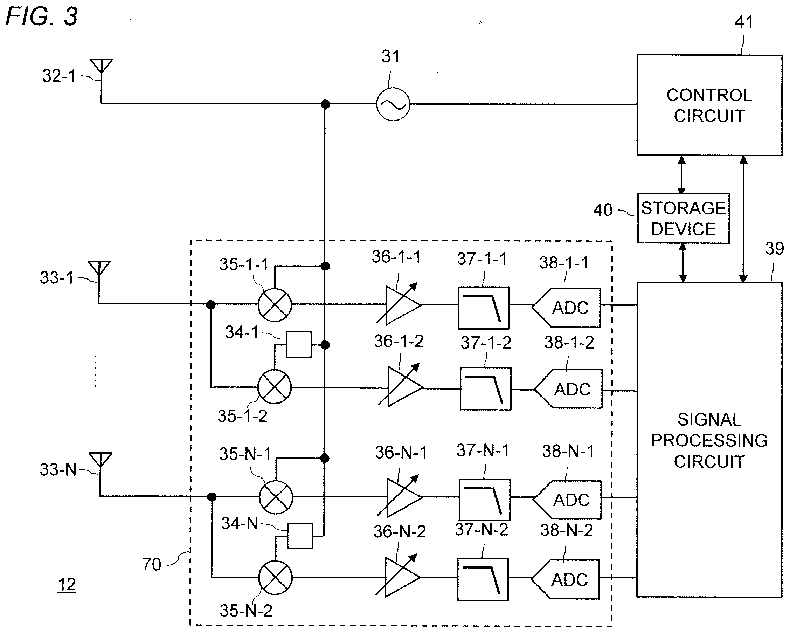

For example, as illustrated in Fig. 3, the radar device 12 is provided with at least a receiver circuit 70, a signal processing circuit 39, and a control circuit 41. When the vehicular apparatus 1 stops at the stop position of the station apparatus 2, the receiver circuit 70 receives a radio signal from a signal source, and outputs a received signal. The signal processing circuit 39 estimates the distance and direction of the signal source with respect to the position of the radar device 12, based on the received signal. The control circuit 41 calibrates the signal processing circuit 39 based on a known distance and a known direction of the signal source with respect to the position of the radar device 12 of the vehicular apparatus 1 stopping at the stop position of the station apparatus 2, so as to minimize an error between the estimated distance and the known distance, and so as to minimize an error between the estimated direction and the known direction.

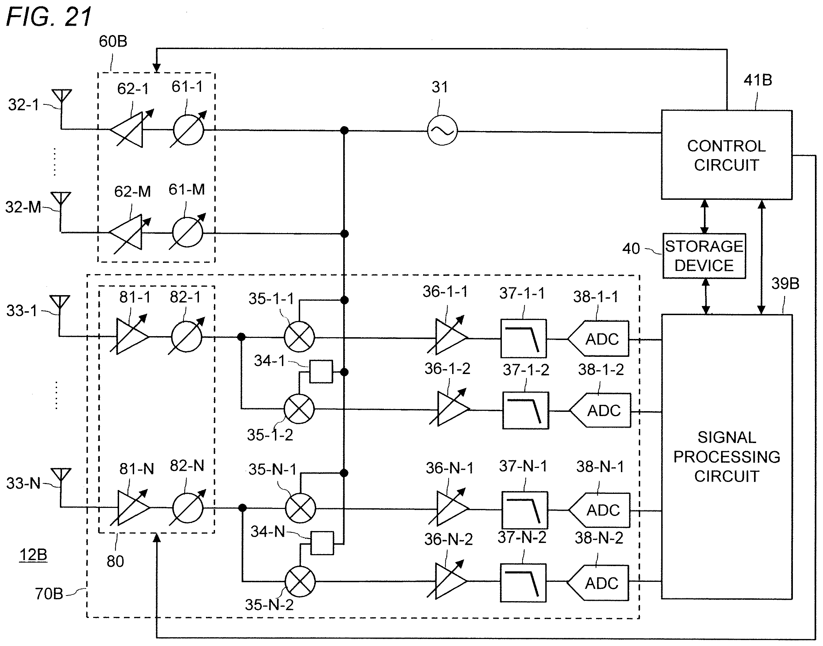

In addition, for example, as illustrated in Fig. 21, in a case where a receiver circuit 70B of a radar device 12B is provided with a radio frequency circuit 80 having at least one of a variable gain and a variable phase shift, a control circuit 41B may calibrate the receiver circuit 70B instead of a signal processing circuit 39B.

In the present specification, "direction" means at least one of an azimuth angle and an elevation angle.

As described above, it may be necessary to recalibrate the radar device 12 after shipment of the radar device. According to the calibration system of the embodiment of the present disclosure, since necessary components for recalibration of the radar device 12 are incorporated into the station apparatus 2, it is possible to easily calibrate the radar device 12 with less efforts than the prior art. According to the calibration system of the embodiment of the present disclosure, it is possible to easily calibrate the radar device 12 with less efforts than the prior art, for example, every time the vehicular apparatus 1 is charged.

[FIRST EMBODIMENT]

[CONFIGURATION OF FIRST EMBODIMENT]

The calibration system of Fig. 1 is provided with the vehicular apparatus 1 and the station apparatus 2, as described above.

Fig. 2 is a block diagram illustrating a configuration of the vehicular apparatus 1 of Fig. 1. The vehicular apparatus 1 is provided with a control device 11, the radar device 12, a connector 13, a rechargeable battery 14, and a driver device 15. The control device 11 controls overall operations of the vehicular apparatus 1. The radar device 12 detects obstacles or the like around the vehicular apparatus 1. The connector 13 is connected to a connector of the charger apparatus 22 as described later. The rechargeable battery 14 stores power supplied from the charger apparatus 22 via the connector 13. The driver device 15 drives the vehicular apparatus 1 using the power of the rechargeable battery 14.

Fig. 3 is a block diagram illustrating a configuration of the radar device 12 of Fig. 2. The radar device 12 is provided with an oscillator 31, an antenna element 32, antenna elements 33-1 to 33-N, phase shifters 34-1 to 34-N, mixers 35-1-1 to 35-N-2, amplifiers 36-1-1 to 36-N-2, filters 37-1-1 to 37-N-2, analog-to-digital converters (ADC) 38-1-1 to 38-N-2, the signal processing circuit 39, a storage device 40, and the control circuit 41.

The oscillator 31 is a transmitter circuit that generates a radio frequency signal having a certain frequency and sends the generated radio frequency signal to the antenna element 32. The oscillator 31 generates, for example, a chirp signal having a frequency gradually increasing or decreasing over time. The oscillator 31 also sends the generated radio frequency signal to the phase shifters 34-1 to 34-N.

The antenna element 32 emits radio frequency signals as radar waves. The antenna elements 33-1 to 33-N receive radar waves emitted from the antenna element 32 and reflected by some reflecting object.

The radio frequency signal received by the antenna element 33-1 is inputted to the mixers 35-1-1 and 35-1-2. The radio frequency signal generated by the oscillator 31 is further inputted to the mixer 35-1-1. In addition, a radio frequency signal generated by the oscillator 31 and having a phase shifted by 90 degrees by the phase shifter 34-1 is further inputted to the mixer 35-1-2. As a result, the mixers 35-1-1 and 35-1-2 generate an I signal and a Q signal having an intermediate frequency, respectively. The amplifier 36-1-1 amplifies the I signal. The filter 37-1-1 blocks unnecessary frequency bands of the I signal. The analog-to-digital converter 38-1-1 converts the analog I signal into a digital signal. The amplifier 36-1-2 amplifies the Q signal. The filter 37-1-2 blocks unnecessary frequency bands of the Q signal. The analog-to-digital converter 38-1-2 converts the analog Q signal into a digital signal. As a result, an I/Q signal outputted from the analog-to-digital converter 38-1 is passed to the signal processing circuit 39, as a received signal of the antenna element 33-1.

In a similar manner to that of the radio frequency signal received by the antenna element 33-1, radio frequency signals received by the antenna elements 33-2 to 33-N are processed by the mixers 35-1-2 to 35-N-2, the phase shifters 34-2 to 34-N, the amplifiers 36-1-2 to 36-N-2, the filters 37-1-2 to 37-N-2, and the analog-to-digital converters 38-1-2 to 38-N-2. As a result, I/Q signals outputted from the analog-to-digital converters 38-2 to 38-N are passed to the signal processing circuit 39, as received signals of the antenna elements 33-2 to 33-N, respectively.

The phase shifters 34-1 to 34-N, the mixers 35-1-1 to 35-N-2, the amplifiers 36-1-1 to 36-N-2, the filters 37-1-1 to 37-N-2, and the analog-to-digital converters 38-1-1 to 38-N-2 constitute the receiver circuit 70.

The signal processing circuit 39 estimates the distance and direction of the reflecting object, based on the I/Q signals outputted from the analog-to-digital converters 38-1-1 to 38-N-2, and notifies the control device 11 of the vehicular apparatus 1, of the estimated distance and direction.

The control circuit 41 controls overall operations of the radar device 12. In addition, the control circuit 41 calculates correction coefficients for calibrating the radar device 12, based on the I/Q signals outputted from the analog-to-digital converters 38-1-1 to 38-N-2, and stores the correction coefficients in the storage device 40. The correction coefficients include, for example, a calibration matrix C for correcting a mode vector of an array antenna device including the antenna elements 33-1 to 33-N (also referred to as "steering vector"), and a distance correction coefficient b for correcting an estimated distance from the radar device 12 to the reflecting object. The calibration matrix C equivalently corrects the amplitudes and phases of the received signals. In addition, the control circuit 41 reads the correction coefficients from the storage device 40, and sets the correction coefficients for the signal processing circuit 39.

When the correction coefficients are set by the control circuit 41, the signal processing circuit 39 corrects the received signals and the estimated distance using software signal processing of that circuit.

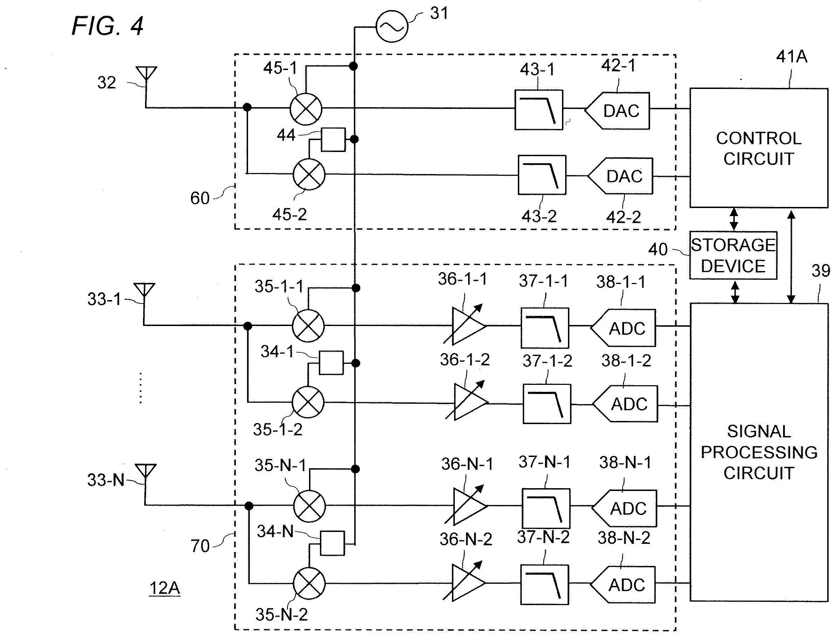

Fig. 4 is a block diagram illustrating a modified embodiment of the radar device 12 of Fig. 2. A radar device 12A of Fig. 4 is provided with a control circuit 41A instead of the control circuit 41 of Fig. 3, and further provided with digital-to-analog converters (DAC) 42-1 and 42-2, filters 43-1 and 43-2, a phase shifter 44, and mixers 45-1 and 45-2. The digital-to-analog converters 42-1 and 42-2 generate certain baseband signals under the control of the control circuit 41A. The filters 43-1 and 43-2 block unnecessary frequency bands of the baseband signals, and the baseband signals having passed through the filters 43-1 and 43-2 are inputted to the mixers 45-1 and 45-2, respectively. The radio frequency signal generated by the oscillator 31 is further inputted to the mixer 45-1. In addition, a radio frequency signal generated by the oscillator 31 and having a phase shifted by 90 degrees by the phase shifter 44 is further inputted to the mixer 45-2. As a result, the mixers 45-1 and 45-2 generate an I signal and a Q signal having a radio frequency, respectively. Thus, the radar device 12A of Fig. 4 applies I/Q modulation to the radio frequency signal generated by the oscillator 31, and emits the modulated signal. The digital-to-analog converters 42-1 and 42-2, the filters 43-1 and 43-2, the phase shifter 44, and the mixers 45-1 and 45-2 constitute a transmitter circuit 60.

Referring to Fig. 1, the station apparatus 2 is provided with a base plate 21, the charger apparatus 22, a pole 23, and the reflector 24. The charger apparatus 22 and the pole 23 are fixed at predetermined positions on the base plate 21. The charger apparatus 22 supplies power to the rechargeable battery 14 of the vehicular apparatus 1. The reflector 24 is fixed to the pole 23. Therefore, when the vehicular apparatus 1 is stopping at the stop position of the station apparatus 2, a distance $L_1$ from the reflector 24 to the radar device 12 is known, and a direction $\theta_1$ of the reflector 24 with respect to the radar device 12 is known. The known distance $L_1$ and direction $\theta_1$ are stored in advance in the storage device 40 of the radar device 12.

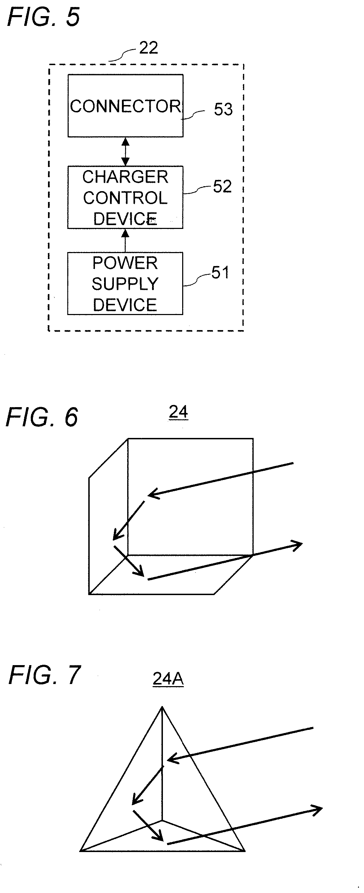

Fig. 5 is a block diagram illustrating a configuration of the charger apparatus 22 of Fig. 1. The charger apparatus 22 is provided with a power supply device 51, a charger control device 52, and a connector 53. The power supply device 51 includes, for example, commercial AC power supply facilities. The charger control device 52 controls power supply from the charger apparatus 22 to the vehicular apparatus 1. The connector 53 is connected to the connector 13 of the vehicular apparatus 1.

Fig. 6 is a perspective view illustrating a configuration of the reflector 24 of Fig. 1. The reflector 24 may be configured to include, for example, three reflector plates orthogonal to each other. As a result, when a radar wave is incident on the reflector 24 from the radar device 12, the reflector 24 can reflect the radar wave accurately toward the radar device 12.

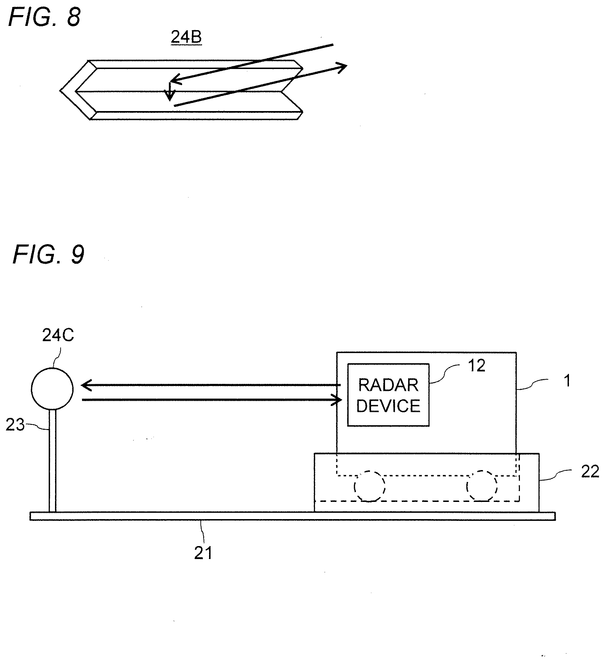

Fig. 7 is a perspective view illustrating a first modified embodiment of the reflector 24 of Fig. 1. Fig. 8 is a perspective view illustrating a second modified embodiment of the reflector 24 of Fig. 1. Fig. 9 is a side view illustrating a configuration of a calibration system including a third modified embodiment of the reflector 24 of Fig. 1. A reflector 24A of Fig. 7 includes triangular reflector plates, instead of the rectangular reflector plates of Fig. 6. A reflector 24B of Fig. 8 includes two reflector plates orthogonal to each other. The reflector 24C of Fig. 9 is a sphere. The present invention is not limited to those illustrated of Figs. 6 to 9, and any other reflector may be used.

[OPERATION OF FIRST EMBODIMENT]

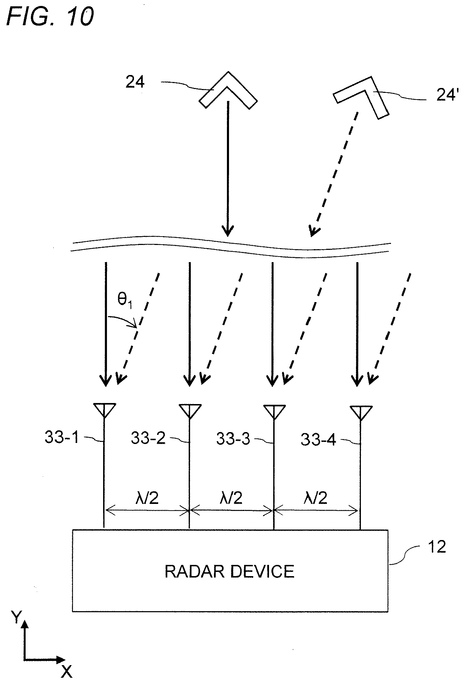

Fig. 10 is a diagram for explaining calibration of the radar device 12 of Fig. 2. The antenna elements 33-1 to 33-N may be configured as, for example, a linear array antenna device in which the antenna elements are arranged at intervals of 1/2 of the operating wavelength. Referring to Fig. 10, only the antenna elements 33-1 to 33-4 are illustrated for ease of illustration.

Referring to Fig. 10, $\theta_1$ denotes the direction of the reflector 24 with respect to the radar device 12, when the vehicular apparatus 1 is stopping at the stop position of the station apparatus 2. In this case, the radar wave incident on the radar device 12 from the reflector 24 has a direction of arrival $\theta_1$. In the example of Fig. 10, the direction $\theta_1$ is set such that the broadside direction of the array antenna device (+Y direction of Fig. 10) is set to 0 degrees. As described above, when the vehicular apparatus 1 is stopping at the stop position of the station apparatus 2, the direction $\theta_1$ is known.

The distance from the radar device 12 to the reflector 24 is set sufficiently larger than the aperture of the array antenna device. For example, when using radar waves in the 79 GHz band, the distance from the radar device 12 to the reflector 24 may be set to several tens of centimeters to several meters. As a result, the radar wave incident on the radar device 12 from the reflector 24 can be regarded as a plane wave. When the reflector 24 is disposed in the broadside direction of the array antenna device, that is, disposed in the position where $\theta_1 = 0$, the distances from the reflector 24 to the antenna elements 33-1 to 33-4 are equal to each other, and in-phase radar waves are incident on the antenna elements 33-1 to 33-4. When a reflector 24' is disposed in a position where $\theta_1 \neq 0$, the distances from the reflector 24' to the antenna elements 33-1 to 33-4 are different from each other, and radar waves having different phases according to the interval among the antenna elements 33-1 to 33-4 and the direction $\theta_1$ are incident on the antenna elements 33-1 to 33-4.

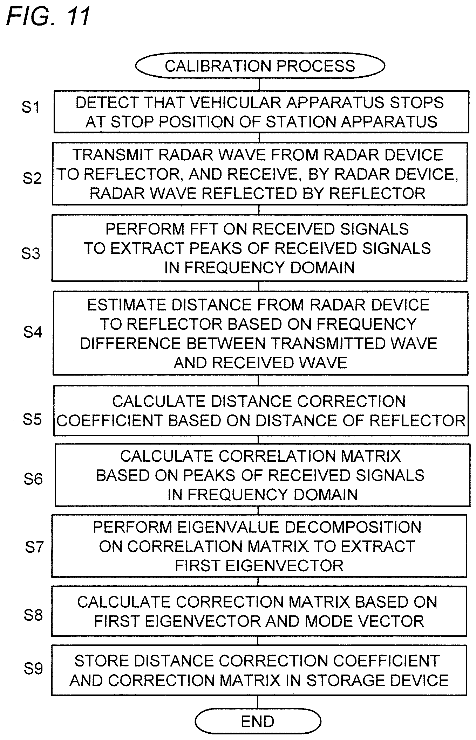

Fig. 11 is a flowchart illustrating calibration process executed by the radar device 12 of Fig. 1.

In step S1, the control circuit 41 detects that the vehicular apparatus 1 is stopping at the stop position of the station apparatus 2. For example, when the connector 13 of the vehicular apparatus 1 and the connector 53 of the charger apparatus 22 are connected to each other, the control circuit 41 may determine that the vehicular apparatus 1 is stopping at the stop position of the station apparatus 2. In this case, the control device 11 of the vehicular apparatus 1 notifies the control circuit 41 of the radar device 12 that the connector 13 of the vehicular apparatus 1 and the connector 53 of the charger apparatus 22 are connected to each other.

In step S2, the radar device 12 transmits a radar wave to the reflector 24, and receives the radar wave reflected by the reflector 24. The radar device 12 transmits the radar wave a predetermined number of times or for a predetermined time period, and then, stops the transmission. As a result, the signal processing circuit 39 obtains the received signals of the antenna elements 33-1 to 33-N.

For example, the received signals of the antenna elements 33-1 to 33-N are modeled as follows.
[Mathematical Expression 1]

$$z(t) = a(\theta) \cdot y(t) + n(t) \qquad (1)$$

Here, z(t) denotes a received signal vector including received signals $z_1(t)$, $z_2(t)$, ..., $z_N(t)$ of the antenna elements 33-1 to 33-N. The received signals $z_1(t)$, ..., $z_N(t)$ are complex-valued. $a(\theta)$ denotes a mode vector of an array antenna device including the antenna elements 33-1 to 33-N. Here, $\theta$ denotes a direction of arrival of the radar wave incident on the radar device 12. In addition, y(t) denotes the complex amplitude of the incoming wave. n(t) denotes an N-dimensional noise vector including additional Gaussian noises of the antenna elements 33-1 to 33-N.

[Mathematical Expression 2]

$$z(t) = [z_1(t), z_2(t), \Lambda, z_N(t)]^T \qquad (2)$$

[Mathematical Expression 3]

$$a(\theta) = \left[ e^{-j\frac{2\pi}{\lambda}x_1\sin\theta}, e^{-j\frac{2\pi}{\lambda}x_2\sin\theta}, \Lambda, e^{-j\frac{2\pi}{\lambda}x_N\sin\theta} \right]^T \qquad (3)$$

[Mathematical Expression 4]

$$n(t) = [n_1(t), n_2(t), \Lambda, n_N(t)]^T \qquad (4)$$

Here, $\lambda$ denotes a wavelength of a radio frequency signal. $x_1$, $x_2$, ..., $x_N$ denote positions of the antenna elements 33-1 to 33-N (X coordinates). A superscript T denotes transposition of the vector (or matrix).

The mode vector $a(\theta)$ of Mathematical Expression (3) is calculated in advance based on designed values of the array antenna device including the antenna elements 33-1 to 33-N, and stored in the storage device 40.

The signal processing circuit 39 may apply a window function, such as a Hamming window or a Blackman window, to the received signals $z_1(t)$, ..., $z_N(t)$ of the antenna elements 33-1 to 33-N.

Next, in steps S3 to S5, the radar device 12 calculates a distance correction coefficient b for correcting the estimated distance from the radar device 12 to the reflecting object, as a correction coefficient for calibrating the radar device 12.

In step S3, the signal processing circuit 39 performs fast Fourier transform (FFT) on each of the received signals $z_1(t)$, ..., $z_N(t)$ of the antenna elements 33-1 to 33-N, to obtain received signals $Z_1(f)$, ..., $Z_N(f)$ in the frequency domain. The received signals $Z_1(f)$, ..., $Z_N(f)$ in the frequency domain are complex-valued, and represent the amplitudes and phases of the received signals at a frequency f. In step S3, the signal processing circuit 39 further extracts peaks $Z_1(f_1)$, ..., $Z_N(f_N)$ of the received signals of the antenna elements 33-1 to 33-N in the frequency domain, respectively. In this case, the amplitude of the received signal $Z_1(f)$ in the frequency domain is maximized at a frequency $f_1$, the amplitude of the received signal $Z_2(f)$ in the frequency domain is maximized at a frequency $f_2$, and similarly, the amplitude of the received signal $Z_N(f)$ in the frequency domain is maximized at a frequency $f_N$. The peak $Z_1(f_1)$ of the received signal in the frequency domain represents the amplitude and phase of the received signal at the frequency $f_1$. Similarly, the peaks $Z_2(f_2)$, ..., $Z_N(f_N)$ of the other received signals in the frequency domain represent the amplitude and phase of the received signals at the frequencies $f_2$, ..., $f_N$, respectively.

In step S4, the signal processing circuit 39 estimates the distance from the radar device 12 to the reflector 24, based on the difference between the frequency of the transmitted radar wave and the frequency of the received radar wave.

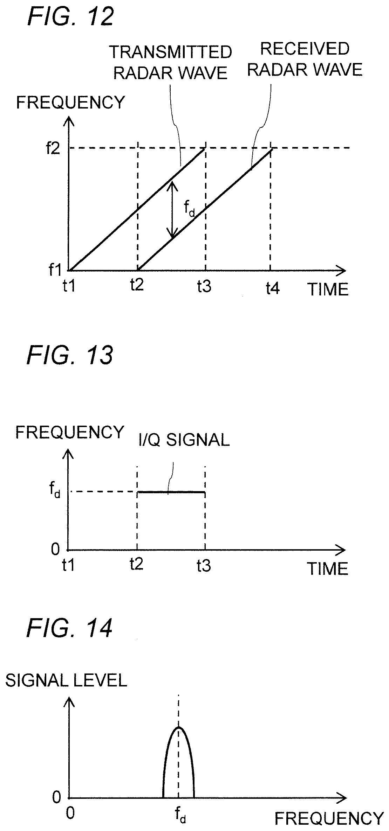

Fig. 12 is a graph illustrating temporal changes in frequencies of the radar wave transmitted from the antenna element 32-1 and the radar wave received by the antenna element 33-1 in the radar device 12 of Fig. 3. The example of Fig. 12 describes a case where the oscillator 31 generates a chirp signal having a frequency linearly increasing over time from the frequency f1 to the frequency f2. The frequency of the received radar wave changes from the frequency of the transmitted radar wave, with a delay time corresponding to the distance from the radar device 12 to the reflector 24. Therefore, a difference $f_d$ between the frequency of the transmitted radar wave and the frequency of the received radar wave changes according to the distance from the radar device 12 to the reflector 24. As the distance increases, the frequency difference $f_d$ also increases, and as the distance decreases, the frequency difference $f_d$ also decreases. In addition, in the time interval from time t2 to time t3, the frequency difference $f_d$ is constant.

Fig. 13 is a graph illustrating a temporal change in frequency of the I/Q signal generated from the radar wave received by the antenna element 33-1 of Fig. 3. Since the transmitted radio frequency signal and the received radio frequency signal are mixed by the mixers 35-1-1 to 35-1-2, the I/Q signal has a constant frequency $f_d$.

Fig. 14 is a graph illustrating frequency characteristics of the I/Q signal generated from the radar wave received by the antenna element 33-1 of Fig. 3. Fig. 14 illustrates a result of performing FFT on the I/Q signal by the signal processing circuit 39. As described with reference to Fig. 12, the frequency $f_d$ changes according to the distance from the radar device 12 to the reflector 24. Therefore, it is possible to estimate the distance from the radar device 12 to the reflector 24, by detecting the frequency at which the signal level of the I/Q signal expressed in the frequency domain is maximized.

The signal processing circuit 39 individually processes the received signals of the antenna elements 33-1 to 33-N. Therefore, the signal processing circuit 39 may individually estimate the distance from the reflector 24 to each of the antenna elements 33-1 to 33-N. In addition, the signal processing circuit 39 may calculate an average of the N distances estimated for the antenna elements 33-1 to 33-N, as the estimated distance from the radar device 12 to the reflector 24.

In step S5 of Fig. 11, the control circuit 41 calculates a distance correction coefficient b, based on the estimated distance $L_{1a}$ and the known distance $L_1$ from the radar device 12 to the reflector 24. As described above, when the vehicular apparatus 1 is stopping at the stop position of the station apparatus 2, the distance $L_1$ from the reflector 24 to the radar device 12 is known. Therefore, the control circuit 41 calculates the difference between the estimated distance $L_{1a}$ and the known distance $L_1$, as the distance correction coefficient b.

The control circuit 41 may individually calculate a distance correction coefficient from the reflector 24 to each of the antenna elements 33-1 to 33-N. In this case, the storage device 40 stores in advance a known distance from the reflector 24 to each of the antenna elements 33-1 to 33-N.

Next, in steps S6 to S8, the radar device 12 calculates a calibration matrix C of the mode vector, as correction coefficients for calibrating the radar device 12.

Although Mathematical Expression (3) represents an ideal mode vector, in practice, the mode vector has a characteristic different from that of Mathematical Expression (3) due to mechanical errors and electrical errors of the antenna elements 33-1 to 33-N. In this case, the actual mode vector $a_{actual}(\theta)$ is given as follows.

[Mathematical Expression 5]

$$a_{actual}(\theta) = Ca(\theta) \qquad (5)$$

Here, C is a calibration matrix given as follows.

[Mathematical Expression 6]

$$C = \begin{pmatrix} c_{11} & c_{12} & \Lambda & c_{1N} \\ c_{21} & O & & \\ M & & O & M \\ c_{N1} & & \Lambda & c_{NN} \end{pmatrix} \qquad (6)$$

The first embodiment describes a case where the calibration matrix C is given as follows.

[Mathematical Expression 7]

$$C = diag[e^{j\phi_1}, e^{j\phi_2}, \Lambda, e^{j\phi_N}]^T \qquad (7)$$

Here, $\phi_1, ..., \phi_N$ denote phase errors of the antenna elements 33-1 to 33-N, respectively.

In step S6, the signal processing circuit 39 calculates a correlation matrix R, based on the peaks $Z_1(f_1), ..., Z_N(f_N)$ of the received signals of the antenna elements 33-1 to 33-N in the frequency domain, as follows.

[Mathematical Expression 8]

$$R = Z Z^H \qquad (8)$$

Here, Z denotes a vector including the peaks $Z_1(f_1), ..., Z_N(f_N)$ of the received signals of the antenna elements 33-1 to 33-N in the frequency domain.

[Mathematical Expression 9]

$$Z = [Z_1(f_1), Z_2(f_2), \Lambda, Z_N(f_N)]^T \qquad (9)$$

In addition, a superscript H denotes complex conjugate transposition of the vector (or matrix).

In a case of transmitting radar waves a plurality of times, an average of a plurality of correlation matrices R calculated for these radar waves may be calculated, and this averaged correlation matrix $R_{ave}$ may be used in subsequent steps. By using the averaged correlation matrix $R_{ave}$, it is possible to improve the signal to noise ratio.

In step S7, the signal processing circuit 39 performs eigenvalue decomposition on the correlation matrix R as follows to extract a first eigenvector $u_1$.
[Mathematical Expression 10]

$$R = U \Lambda U^H \qquad (10)$$

[Mathematical Expression 11]

$$U = [u_1, u_2, \Lambda, u_N] \qquad (11)$$

[Mathematical Expression 12]

$$\Lambda = diag[\lambda_1, \lambda_2, \Lambda, \lambda_N] \qquad (12)$$

Here, $u_1$, ..., $u_N$ denote eigenvectors, and $\lambda_1$, ..., $\lambda_N$ denote eigenvalues. The first eigenvector $u_1$ (i.e., eigenvector corresponding to the largest eigenvalue $\lambda_1$) corresponds to the radar wave transmitted from the radar device 12 and reflected by the reflector 24. In addition, the other eigenvectors $u_2$, ..., $u_N$ correspond to noises.
In step S8, the control circuit 41 calculates a calibration matrix C of the mode vector, based on the first eigenvector $u_1$ and the mode vector $a(\theta_1)$.
Since the received signals of the antenna elements 33-1 to 33-N include errors of the front end of the radar device 12, the first eigenvector $u_1$ is given as follows.
[Mathematical Expression 13]

$$u_1 = C\, a(\theta_1) \qquad (13)$$

Here, $\theta_1$ denotes the direction of the reflector 24 with respect to the position of the radar device 12, when the vehicular apparatus 1 is stopping at the stop position of the station apparatus 2, as described above.
Therefore, elements $c_{pq}$ ($1 \leq p, q \leq N$) of the calibration matrix C are given as follows based on the first eigenvector $u_1$ and the mode vector $a(\theta_1)$.
[Mathematical Expression 14]

$$\begin{cases} c_{pq} = u_{p1}\, e^{j\frac{2\pi}{\lambda} x_p \sin\theta_1} & (p = q) \\[4mm] c_{pq} = 0 & (p \neq q) \end{cases} \qquad (14)$$

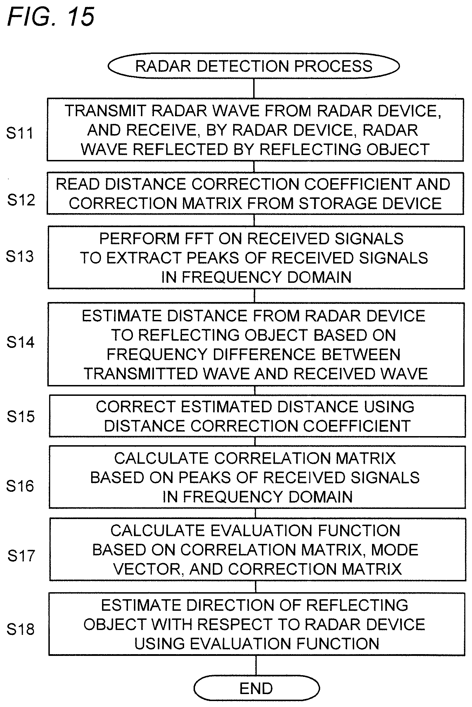

Here, $u_{p1}$ ($1 \leq p \leq N$) denote elements of the first eigenvector $u_1$.
In step S9, the control circuit 41 stores the distance correction coefficient b calculated in step S5, and the calibration matrix C calculated in step S8, in the storage device 40.
By executing the calibration process of Fig. 11, the radar device 12 can calibrate the signal processing circuit 39 so as to minimize an error between the estimated distance and the known distance, and so as to minimize an error between the estimated direction and the known direction.
When the radar device 12 is used to actually detect obstacles or the like around the vehicular apparatus 1, the radar device 12 executes the radar detection process of Fig. 15.
Fig. 15 is a flowchart illustrating radar detection process executed by the radar device 12 of Fig. 1.
In step S11, the radar device 12 transmits a radar wave, and receives the radar wave reflected by a reflecting object.
In step S12, the control circuit 41 reads the distance correction coefficient b and the calibration matrix C from the storage device 40, and sets them for the signal processing circuit 39.
In step S13, the signal processing circuit 39 performs FFT on each of the received signals of the antenna elements 33-1 to 33-N, and further extracts the peaks $Z_1(f_1)$, ..., $Z_N(f_N)$ of the received signals of the antenna elements 33-1 to 33-N in the frequency domain, respectively.

In step S14, the signal processing circuit 39 estimates the distance from the radar device 12 to the reflecting object, based on the difference between the frequency of the transmitted radar wave and the frequency of the received radar wave. In step S15, the signal processing circuit 39 corrects the estimated distance using the distance correction coefficient b.

In step S16, the signal processing circuit 39 calculates the correlation matrix R using Mathematical Expression (8), based on the peaks $Z_1(f_1)$, ..., $Z_N(f_N)$ of the received signals of the antenna elements 33-1 to 33-N in the frequency domain.

In step S17, the signal processing circuit 39 calculates an evaluation function $P(\theta)$ based on the correlation matrix R, the mode vector $a(\theta)$, and the calibration matrix C.

For example, the evaluation function $P(\theta)$ is given as follows.

[Mathematical Expression 15]

$$P(\theta) = \frac{a^H(\theta)\, C^H\, R\, C\, a(\theta)}{a^H(\theta)\, C^H\, C\, a(\theta)} \qquad (15)$$

Mathematical Expression (15) represents the power of the incident wave depending on the direction of arrival $\theta$. For example, according to a method for estimating a direction of arrival, called a beamformer method, Mathematical Expression (15) is used as an evaluation function, with the variable $\theta$ of Mathematical Expression (15) being changed, and it is possible to estimate the direction of arrival of the incident wave to be the value of the variable $\theta$ at which the evaluation function $P(\theta)$ is maximized.

In step S18, the signal processing circuit 39 estimates the direction of the reflecting object with respect to the radar device 12, using the evaluation function $P(\theta)$ calculated in step S17 (direction search). For example, the signal processing circuit 39 increments the variable $\theta$ from a certain initial value by a predetermined step width, and estimates the direction of the reflecting object to be the value of the variable $\theta$ at which the evaluation function $P(\theta)$ of Mathematical Expression (15) is maximized.

Thereafter, the signal processing circuit 39 notifies the control device 11 of the vehicular apparatus 1, of the estimated distance and direction.

Steps S11, S13, S14, and S16 are similar to steps S2, S3, S4, and S6 of Fig. 11.

By executing the radar detection process of Fig. 15, the radar device 12 can minimize an error between the estimated distance and the known distance, minimize an error between the estimated direction and the known direction, and accurately detect the distance and direction of the reflecting object.

The calibration matrix C of Mathematical Expression (14) is calculated for a case where the radar wave incident on the radar device 12 from the reflector 24 has the direction of arrival $\theta_1$. Therefore, the evaluation function calculated based on the calibration matrix C of Mathematical Expression (14) can estimate the direction of the reflecting object with high accuracy particularly near the direction $\theta_1$. Similarly, the distance correction coefficient b can also estimate the distance of the reflecting object with high accuracy particularly near the direction $\theta_1$.

Although Mathematical Expression (7) represents a case where the calibration matrix C corrects only the phases of the received signals, the calibration matrix may be configured to correct the amplitudes and phases of the received signals.

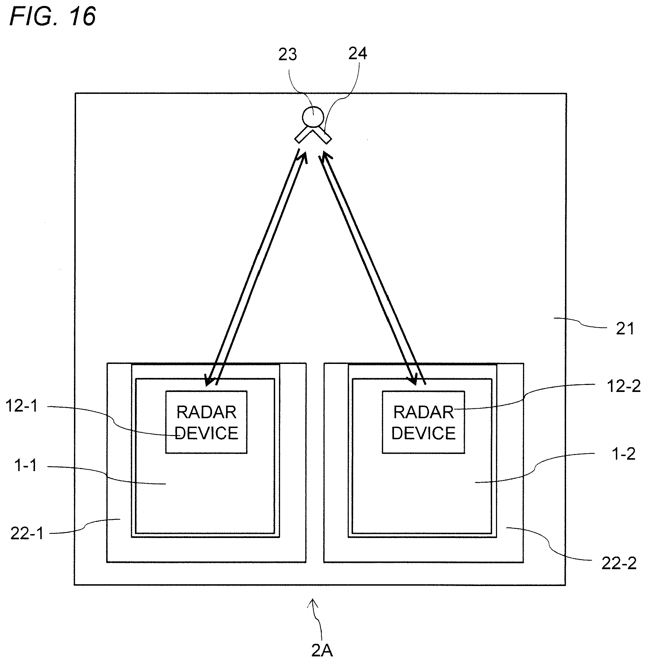

Fig. 16 is a top view illustrating a configuration of a calibration system according to a first modified embodiment of the first embodiment. The calibration system of Fig. 16 is provided with a plurality of vehicular apparatuses 1-1 and 1-2, and a station apparatus 2A. The station apparatus 2A is provided with a plurality of charger apparatuses 22-1 and 22-2, and can accommodate the plurality of vehicular apparatuses 1-1 and 1-2. One reflector 24 may be shared in order to calibrate radar devices 12-1 and 12-2 of the vehicular apparatuses 1-1 and 1-2.

[ADVANTAGEOUS EFFECTS OF FIRST EMBODIMENT]

According to the calibration system of the first embodiment, since necessary components for recalibration of the radar device 12 are incorporated into the station apparatus 2, it is possible to easily calibrate the signal processing circuit 39 of the radar device 12 with less efforts than the prior art.

When the vehicular apparatus 1 is stopping at the stop position of the station apparatus 2, the distance from the reflector 24 to the radar device 12 is known, and the direction of the reflector 24 with respect to the radar device 12 is also known. According to the calibration system of the first embodiment, it is possible to accurately and easily reproduce conditions for calibration.

The vehicular apparatus 1 driven by the power of the rechargeable battery 14 will return to the station apparatus 2 when requiring charging. Therefore, according to the calibration system of the first embodiment, it is possible to easily calibrate the radar device 12 with less efforts than the prior art, for example, every time the vehicular apparatus 1 is charged. In this case, since the radar device 12 is calibrated during charging of the vehicular apparatus 1, power would not become insufficient and shutdown during calibration.

According to the calibration system of the first embodiment, by repeating calibration of the radar device 12, it is possible to reduce errors of the estimated distance and direction, and maintain the performance of the radar device 12 achieved when shipping, at the customer's site.

[SECOND EMBODIMENT]

[CONFIGURATION OF SECOND EMBODIMENT]

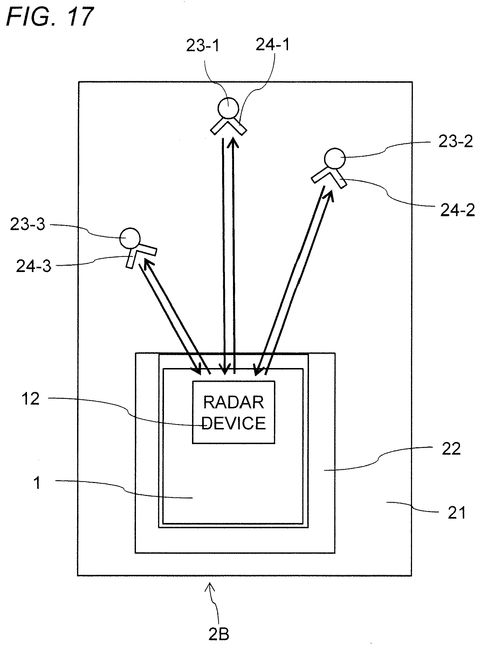

Fig. 17 is a top view illustrating a configuration of a calibration system according to a second embodiment. The calibration system of Fig. 17 is provided with the vehicular apparatus 1 and a station apparatus 2B. The station apparatus 2B is provided with a plurality of reflectors 24-1 to 24-3 in order to calibrate the radar device 12 of the one vehicular apparatus 1. The reflectors 24-1 to 24-3 are fixed to poles 23-1 to 23-3, respectively.

When the vehicular apparatus 1 is stopping at the stop position of the station apparatus 2B, the distances from the reflectors 24-1 to 24-3 to the radar device 12 are known. When the vehicular apparatus 1 is stopping at the stop position of the station apparatus 2B, the directions of the reflectors 24-1 to 24-3 with respect to the radar device 12 are known.

The reflectors 24-1 to 24-3 are located at a plurality of different positions of the station apparatus 2 so as to be located in different directions as seen from the stop position of the station apparatus 2B (i.e., to be located in different directions as seen from radar device 12 when vehicular apparatus 1 is stopping at the stop position).

In addition, the distances from the reflectors 24-1 to 24-3 to the stop position (i.e., distances from reflectors 24-1 to 24-3 to radar device 12 when vehicular apparatus 1 is stopping at the stop position) are set to be different from each other.

Hereinbelow, the second embodiment describes a case where the calibration system is provided with K reflectors 24-1 to 24-K. When the vehicular apparatus 1 is stopping at the stop position of the station apparatus 2B, a distance $L_k$ from a reflector 24-k ($1 \leq k \leq K$) to the radar device 12 is known, and a direction $\theta_k$ of the reflector 24-k with respect to the radar device 12 is known. The known distances $L_k$ and directions $\theta_k$ are stored in advance in the storage device 40 of the radar device 12.

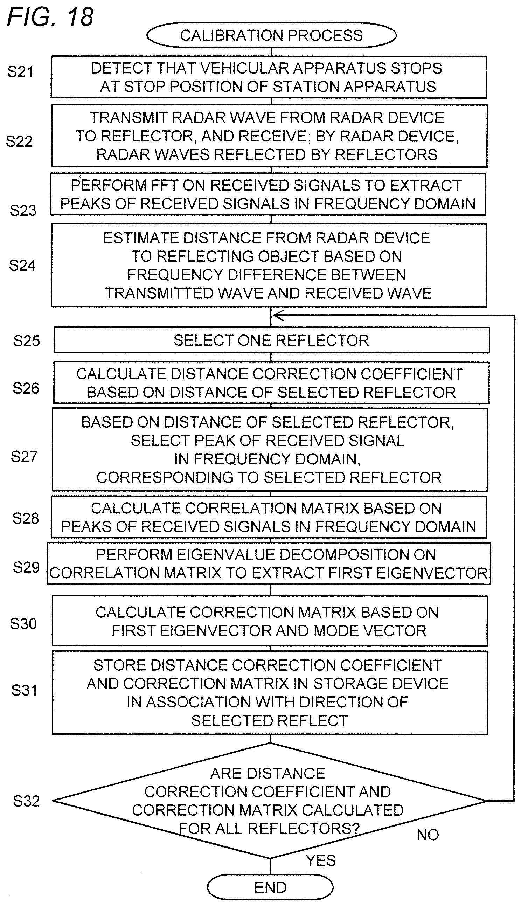

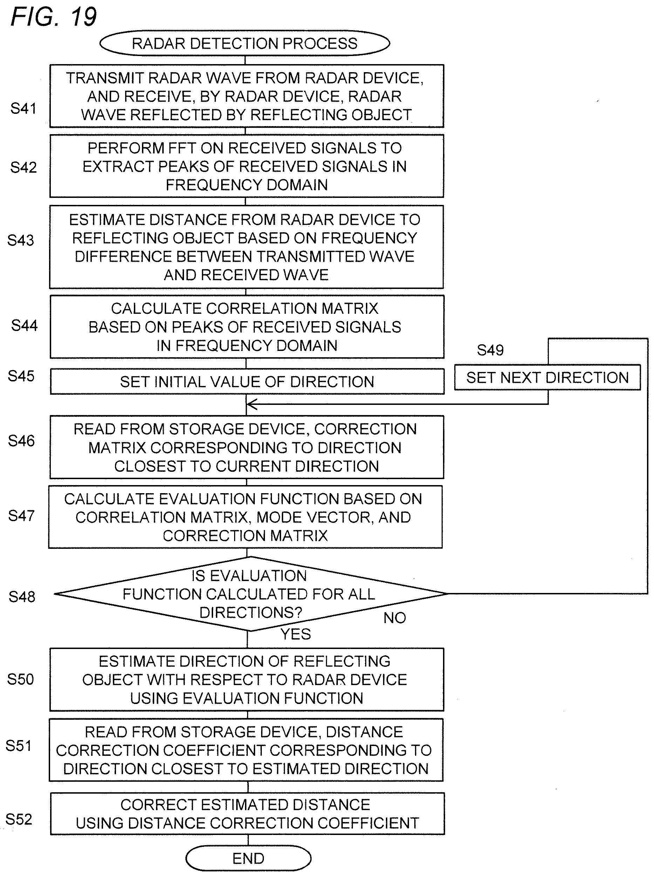

The vehicular apparatus 1 of Fig. 17 is configured in a manner similar to that of the vehicular apparatus 1 of Fig. 1. In addition, the radar device 12 of Fig. 17 is configured in a manner similar to that of the radar device 12 of Fig. 1, except for executing calibration process of Fig. 18 and radar detection process of Fig. 19. In addition, the charger apparatus 22 of Fig. 17 is configured in a manner similar to that of the charger apparatus 22 of Fig. 1.

[OPERATION OF SECOND EMBODIMENT]

Fig. 18 is a flowchart illustrating calibration process executed by the radar device 12 of Fig. 17.

In step S21, the control circuit 41 detects that the vehicular apparatus 1 is stopping at the stop position of the station apparatus 2B.

In step S22, the radar device 12 transmits radar waves to the reflectors 24-1 to 24-K, and receives the radar waves reflected by the reflectors 24-1 to 24-K.

In step S23, the signal processing circuit 39 performs FFT on each of the received signals of antenna elements 33-1 to 33-N to obtain received signals $Z_1(f)$, ..., $Z_N(f)$ in the frequency domain. Further, in step S23, the signal processing circuit 39 extracts peaks $Z_1(f_{1,1})$, $Z_1(f_{1,2})$, ..., $Z_1(f_{1,K})$ of the received signal of the antenna element 33-1 in the frequency domain. In this case, the amplitude of the received signal $Z_1(f)$ in the frequency domain is locally maximized at frequencies $f_{1,1}$, ..., $f_{1,K}$. In addition, in step S23, the signal processing circuit 39 extracts peaks $Z_2(f_{2,1})$, $Z_2(f_{2,2})$, ..., $Z_2(f_{2,K})$ of the received signal of the antenna element 33-2 in the frequency domain. In this case, the amplitude of the received signal $Z_2(f)$ in the frequency domain is locally maximized at frequencies $f_{2,1}$, ..., $f_{2,K}$. Similarly, in step S23, the signal processing circuit 39 extracts peaks $Z_N(f_{N,1})$, $Z_N(f_{N,2})$, ..., $Z_N(f_{N,K})$ of the received signal of the antenna element 33-N in the frequency domain. In this case, the amplitude of the received signal $Z_N(f)$ in the frequency domain is locally maximized at frequencies $f_{N,1}$, ..., $f_{N,K}$.

As described with reference to Figs. 12 to 14, the difference $f_d$ between the frequency of the transmitted radar wave and the frequency of the received radar wave changes according to the distances $L_1$ to $L_K$ from the radar device 12 to the reflector 24. In addition, as described above, the distances $L_1$ to $L_K$ from the reflectors 24-1 to 24-K to the radar device 12 are set to be different from each other, when the vehicular apparatus 1 is stopping at the stop position. As a result, the difference between the frequency of the transmitted radar wave and the frequency of the received radar wave is different for each of the reflectors 24-1 to 24-K. Therefore, the received signal of each of the antenna elements 33-1 to 33-N in the frequency domain has K peaks different from each other.

In step S24, the signal processing circuit 39 estimates the distances $L_1$ to $L_K$ from the radar device 12 to the reflectors 24-1 to 24-K, based on the differences between the frequency of the transmitted radar wave and the frequencies of the received radar waves. The signal processing circuit 39 can simultaneously estimate the distances $L_1$ to $L_K$ from the radar device 12 to the reflectors 24-1 to 24-K, by extracting the K peaks of the received signals in the frequency domain. In addition, the estimated distance from the radar device 12 to the reflector 24-k may have an error from the known distance $L_k$. The signal processing circuit 39 regards the estimated distance of the reflector 24-k closest to the known distance $L_k$ of the reflector 24-k, among the estimated K distances, as the estimated distance of the reflector 24-k. Hereinbelow, the estimated distances from the radar device 12 to the reflectors 24-1 to 24-K are indicated by reference signs $L_{1a}$ to $L_{Ka}$.

In step S25, the control circuit 41 selects one reflector 24-k. In the following steps, the control circuit 41 calculates a distance correction coefficient $b_k$ and a calibration matrix $C_k$ for each reflector 24-k.

In step S26, the control circuit 41 calculates a distance correction coefficient $b_k$, based on the estimated distance $L_{ka}$ and the known distance $L_k$ from the radar device 12 to the selected reflector 24-k.

In step S27, the signal processing circuit 39 selects the peaks $Z_1(f_{1,k})$, ..., $Z_N(f_{N,k})$ of the received signals in the frequency domain corresponding to the radar wave reflected by the selected reflector 24-k, based on the estimated distance $L_k$ from the radar device 12 to the selected reflector 24-k. The received signal includes radar waves reflected by the plurality of reflectors 24-1 to 24-K. Therefore, in step S27, the control circuit 41 removes components corresponding to radar waves reflected by reflectors other than the selected reflector 24-k.

In step S28, the signal processing circuit 39 calculates the correlation matrix R using Mathematical Expression (8), based on the peaks $Z_1(f_{1,k})$, ..., $Z_N(f_{N,k})$ of the received signals of the antenna elements 33-1 to 33-N in the frequency domain. In this case, the vector Z in Mathematical Expression (8) includes the peaks $Z_1(f_{1,k})$, ..., $Z_N(f_{N,k})$ of the received signals of the antenna elements 33-1 to 33-N in the frequency domain.

In step S29, the signal processing circuit 39 performs eigenvalue decomposition on the correlation matrix R to extract a first eigenvector $u_1$.

In step S30, the control circuit 41 calculates a calibration matrix $C_k$ of the mode vector corresponding to the selected reflector 24-k, based on the first eigenvector $u_1$ and a mode vector $a(\theta_k)$. An element $c_{pq}$ ($1 \leq p, q \leq N$) of the calibration matrix $C_k$ is give ns follows based on the first eigenvector $u_1$ and the mode vector $a(\theta_k)$.

[Mathematical Expression 16]

$$\begin{cases} c_{pq} = u_{p1}\, e^{j\frac{2\pi}{\lambda}x_p \sin\theta_k} & (p = q) \\ \\ c_{pq} = 0 & (p \neq q) \end{cases} \qquad (16)$$

In step S31, the control circuit 41 stores the distance correction coefficient $b_k$ calculated in step S26, and the calibration matrix $C_k$ calculated in step S30, in the storage device 40, in association with the known direction $\theta_k$ of the selected reflector 24-k.

In step S32, the control circuit 41 determines whether or not the distance correction coefficient $b_k$ and the calibration matrix $C_k$ have been calculated for all the reflectors 24-1 to 24-K: if YES, the process ends, and if NO, the process returns to step S25, and selects another reflector to repeat steps S26 to S32.

Steps S21 to S23 are similar to steps S1 to S3 of Fig. 11. Step S24 is similar to step S4 of Fig. 11, except for estimating a plurality of distances corresponding to the reflectors 24-1 to 24-K. Steps S26, S28, S29, and S30 are similar to steps S5 to S8 of Fig. 11, except for repeating for the plurality of reflectors 24-1 to 24-K.

Thus, the radar device 12 calculates the correction coefficients for each of the reflectors 24-1 to 24-K. The radar device 12 stores the correction coefficients in the storage device 40 in association with the directions of the reflectors 24-1 to 24-K as seen from the radar device 12.

Fig. 19 is a flowchart illustrating radar detection process executed by the radar device 12 of Fig. 17.

In step S41, the radar device 12 transmits a radar wave, and receives the radar wave reflected by a reflecting object.

In step S42, the signal processing circuit 39 performs FFT on each of the received signals of the antenna elements 33-1 to 33-N, and further extracts the peaks $Z_1(f_1)$, ..., $Z_N(f_N)$ of the received signals of the antenna elements 33-1 to 33-N in the frequency domain, respectively.

In step S43, the signal processing circuit 39 estimates the distance from the radar device 12 to the reflecting object, based on the difference between the frequency of the transmitted radar wave and the frequency of the received radar wave.

In step S44, the signal processing circuit 39 calculates a correlation matrix R using Mathematical Expression (8), based on the peaks $Z_1(f_1)$, ..., $Z_N(f_N)$ of the received signals of the antenna elements 33-1 to 33-N in the frequency domain.

In step S45, the control circuit 41 sets an initial value of the direction $\theta$.

In step S46, the control circuit 41 reads the calibration matrix $C_k$ corresponding to the direction closest to the current direction $\theta$, from the storage device 40, and sets the calibration matrix $C_k$ for the signal processing circuit 39.

In step S47, the signal processing circuit 39 calculates an evaluation function $P_k(\theta)$ as follows based on the correlation matrix R, the mode vector $a(\theta)$, and the calibration matrix $C_k$.

[Mathematical Expression 17]

$$P_k(\theta) = \frac{a^H(\theta)\, C_k^H\, R\, C_k\, a(\theta)}{a^H(\theta)\, C_k^H\, C_k\, a(\theta)} \qquad (17)$$

The calculated evaluation function $P_k(\theta)$ is stored in the storage device 40 in association with the known direction $\theta_k$ of the reflector 24-k associated with the calibration matrix $C_k$ of Mathematical Expression (17).

In step S48, the control circuit 41 determines whether or not the evaluation function $P_k(\theta)$ has been calculated for all the directions $\theta$: if YES, the process proceeds to step S50, and if NO, the process proceeds to step S49. In step S49, the control circuit 41 sets the next direction $\theta$ by incrementing the direction $\theta$ by a predetermined step width, and repeats steps S46 to S48. As a result, a plurality of evaluation functions $P_k(\theta)$ are obtained, which are calculated based on different calibration matrices $C_k$ according to the direction $\theta$.

In step S50, the signal processing circuit 39 estimates the direction of the reflecting object with respect to the radar device 12, using the evaluation function $P_k(\theta)$ calculated in steps S46 to S49. For example, the signal processing circuit 39 increments the variable $\theta$ from the certain initial value by a predetermined step width, selects the evaluation function $P_k(\theta)$ associated with a direction $\theta_k$ closest to the current variable $\theta$, and estimates the direction of the reflecting object to be the value of the variable $\theta$ at which the evaluation function $P_k(\theta)$ is maximized.

In step S51, the control circuit 41 reads the distance correction coefficient $b_k$ corresponding to the direction closest to the direction estimated in step S50, from the storage device 40, and sets the distance correction coefficient $b_k$ for the signal processing circuit 39.

In step S52, the signal processing circuit 39 corrects the estimated distance using the distance correction coefficient $b_k$.

Steps S41 to S44 and S52 are similar to steps S11, S13, S14, S16, and S15 of Fig. 15.

The calibration matrix $C_k$ of Mathematical Expression (16) is calculated for a case where the radar wave incident on the radar device 12 from the reflector 24-k has a direction of arrival $\theta_k$. Therefore, the evaluation function calculated based on the calibration matrix $C_k$ of Mathematical Expression (16) can estimate the direction of the reflecting object with high accuracy particularly near the direction $\theta_k$. Similarly, the distance correction coefficient $b_k$ can also estimate the distance of the reflecting object with high accuracy particularly near the direction $\theta_k$. According to the radar detection process of Fig. 19, by selectively using a plurality of sets of correction coefficients according to the direction of arrival of the radar wave, it is possible to estimate the direction and distance of the reflecting object with high accuracy over a wider angular width as compared with the case of using one set of correction coefficients.

In addition, according to the radar detection process of Fig. 19, when a plurality of reflecting objects considered to be located in different directions are detected from the received radar wave, the control circuit 41 may read different correction coefficients from the storage device 40 according to the directions in which the reflecting objects are located. The radar device 12 repeats the process until the estimated distances and directions are corrected for all the reflecting objects.

When the calibration system is provided with a plurality of reflectors, one distance correction coefficient b and one calibration matrix $C_0$ may be calculated and used, instead of calculating and using different distance correction coefficient $b_k$ and calibration matrix $C_k$ for each reflector 24-k as illustrated in Figs. 18 and 19. Hereinbelow, a modified embodiment of the second embodiment will be described.

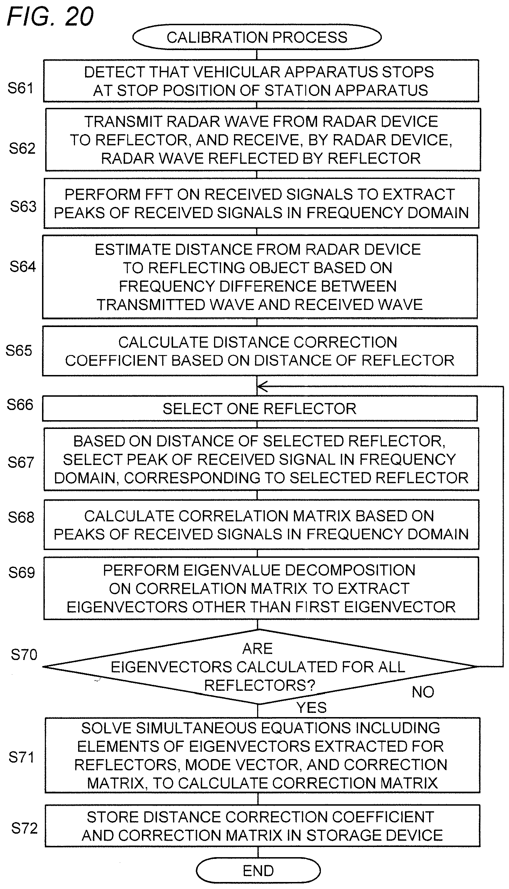

Fig. 20 is a flowchart illustrating a modified embodiment of calibration process executed by the radar device 12 of Fig. 17.

In step S61, the control circuit 41 detects that the vehicular apparatus 1 is stopping at the stop position of the station apparatus 2B.

In step S62, the radar device 12 transmits a radar wave to reflectors 24-1 to 24-K, and receives the radar waves reflected by the reflectors 24-1 to 24-K.

In step S63, the signal processing circuit 39 performs FFT on each of the received signals of antenna elements 33-1 to 33-N, and further extracts peaks $Z_1(f_{1,1})$, ..., $Z_1(f_{1,K})$, ..., $Z_N(f_{N,1})$, ..., $Z_N(f_{N,K})$ of the received signals of the antenna elements 33-1 to 33-N in the frequency domain, respectively.

In step S64, the signal processing circuit 39 estimates distances $L_1$ to $L_K$ from the radar device 12 to the reflectors 24-1 to 24-K, based on the differences between the frequency of the transmitted radar wave and the frequencies of the received radar waves. Hereinbelow, the estimated distances from the radar device 12 to the reflectors 24-1 to 24-K are indicated by reference signs $L_{1a}$ to $L_{Ka}$.

In step S65, the control circuit 41 calculates a distance correction coefficient b, based on the estimated distance and the known distance from the radar device 12 to one of the reflectors 24-1 to 24-K. Even if the distance from the radar device 12 to the reflecting object changes, it can be considered that the error in distance almost does not change. Therefore, in the modified embodiment of Fig. 20, the control circuit 41 calculates only one distance correction coefficient b. Instead of calculating the distance correction coefficient b for one of the reflectors 24-1 to 24-K, the control circuit 41 may calculate the distance correction coefficient $b_k$ for each of the reflectors 24-k in a similar manner to that of the calibration process of Fig. 19, and calculate an average of the distance correction coefficients $b_1$, ..., $b_K$ as the distance correction coefficient b.

In step S66, the control circuit 41 selects one reflector 24-k.

In step S67, the signal processing circuit 39 selects the peaks $Z_1(f_{1,k})$, ..., $Z_N(f_{N,k})$ of the received signals in the frequency domain corresponding to the radar wave reflected by the selected reflector 24-k, based on the estimated distance $L_k$ from the radar device 12 to the selected reflector 24-k.

In step S68, the signal processing circuit 39 calculates a correlation matrix R using Mathematical Expression (8), based on the peaks $Z_1(f_{1,k})$, ..., $Z_N(f_{N,k})$ of the received signals of the antenna elements 33-1 to 33-N in the frequency domain.

In step S69, the signal processing circuit 39 performs eigenvalue decomposition on the correlation matrix R, and extracts eigenvectors $u_{2,k}$, ..., $u_{N,k}$ other than the first eigenvector $u_{1,k}$ corresponding to the selected reflector 24-k.

In step S70, the control circuit 41 determines whether or not the eigenvectors $u_{2,k}$, ..., $u_{N,k}$ have been calculated for all the reflectors 24-1 to 24-K: if YES, the process proceeds to step S71, and if NO, the process returns to step S66 to select another reflector to repeat steps S67 to S70.

In step S71, the control circuit 41 calculates a calibration matrix $C_0$ of the mode vector by solving simultaneous equations including the eigenvectors $u_{2,k}$, ..., $u_{N,k}$ extracted for each of the reflectors 24-1 to 24-K, the mode vector $a(\theta)$, and the elements of the calibration matrix $C_0$.

As described above, since the eigenvectors $u_{2,k}$, ..., $u_{N,k}$ correspond to noises, the following equation is obtained from orthogonality between the signal subspace and the noise subspace.

[Mathematical Expression 18]

$$u_{i,k}^H \, a_{actual}(\theta_k) = u_{i,k}^H \, C \, a(\theta_k) = 0 \qquad (18)$$

Here, parameters i and k of the eigenvector $u_{i,k}$ satisfy $2 \le i \le N$ and $1 \le k \le K$, respectively.

The elements of the calibration matrix $C_0$ are defined in a manner similar to that of Mathematical Expression (6). A vector D including elements of the calibration matrix $C_0$ is defined as follows.

[Mathematical Expression 19]

$$D = \begin{bmatrix} c_1^T \\ c_2^T \\ \mathbf{M} \\ c_N^T \end{bmatrix} \qquad (19)$$

[Mathematical Expression 20]

$$c_p = (c_{p1}, c_{p2}, \Lambda, c_{pN}) \qquad (20)$$

Here, $c_p$ $(1 \le p \le N)$ is a vector including elements of the p-th row of the calibration matrix $C_0$.

By rewriting Mathematical Expression (18) using vector D, the following equation is obtained.

[Mathematical Expression 21]

$$\begin{bmatrix} u_{2,k}^{H} \otimes a(\theta_k)^T \\ u_{3,k}^{H} \otimes a(\theta_k)^T \\ \mathbf{M} \\ u_{N,k}^{H} \otimes a(\theta_k)^T \end{bmatrix} D = \left[ U_k^{H} \otimes a(\theta_k)^T \right] D = 0 \qquad (21)$$

$\otimes$ : Kronecker Product

Here, the matrix $U_k$ includes elements of eigenvectors $u_{2,k}, ..., u_{N,k}$.

As described above, since the eigenvectors $u_{2,k}, ..., u_{N,k}$ are calculated for each of the K reflectors 24-1 to 24-K, the following simultaneous equations are obtained for the vector D including the elements of the calibration matrix $C_0$.

[Mathematical Expression 22]

$$\begin{bmatrix} U_1^{H} \otimes a(\theta_1)^T \\ U_2^{H} \otimes a(\theta_2)^T \\ \mathbf{M} \\ U_K^{H} \otimes a(\theta_K)^T \end{bmatrix} D = VD = 0 \qquad (22)$$

Here, a matrix V includes elements of a matrix $U_k$ and a mode vector $a(\theta_k)$.

Since the estimation accuracy of the direction of arrival is not affected by multiplying the calibration matrix $C_0$ by a constant, one of the elements of the vector D may be normalized. In the example of the present specification, the element of the vector D corresponding to the element $c_{11}$ of the calibration matrix $C_0$ is set to "1", and the remaining elements of the vector D are indicated by d'. In addition, the first column of a matrix V is indicated by v, and a submatrix including the remaining elements of the matrix V is indicated by V'. In this case, the following equation is obtained from Mathematical Expression (22).

[Mathematical Expression 23]

$$VD = \begin{bmatrix} v & V' \end{bmatrix} \begin{bmatrix} 1 \\ d' \end{bmatrix} = v + V' d' = 0 \qquad (23)$$

Therefore, the vector d' including the elements of the calibration matrix $C_0$ is calculated as follows.

[Mathematical Expression 24]

$$d' = -(V'^{H} V')^{-1} V'^{H} v \qquad (24)$$

The control circuit 41 can calculate the calibration matrix $C_0$ using Mathematical Expressions (19) and (24). In order to solve Mathematical Expressions (19) and (24) with respect to an element of the calibration matrix $C_0$, it is necessary to provide a larger number of reflectors 24-1 to 24-K than the number of antenna elements 33-1 to 33-N, due to the restriction of the number of unknowns of the equations.

In step S72, the control circuit 41 stores the distance correction coefficient b calculated in step S65, and the calibration matrix $C_0$ calculated in step S71, in the storage device 40.

Steps S61 to S64 and S67 to S68 are similar to steps S21 to S24 and S27 to S28 of Fig. 18.

When actually detecting obstacles or the like around the vehicular apparatus 1 using the radar device 12, the radar device 12 executes the radar detection process of Fig. 15 using the distance correction coefficient b and the calibration matrix $C_0$ obtained in the calibration process of Fig. 20.

According to Mathematical Expressions (18) to (24), the calibration matrix $C_0$ is calculated based on all the radar wave incident on the radar device 12 from the plurality of reflectors 24-1 to 24-K arranged in different directions. Therefore, according to the radar detection process of Fig. 15, it is possible to estimate the direction and distance of the reflecting object with high accuracy over a wide angular width, using one calibration matrix $C_0$. In addition, when executing the radar detection process, since one calibration matrix $C_0$ is used instead of the plurality of calibration matrices $C_1, ..., C_K$, it is possible to simplify the process as compared with the case of Fig. 19.

[ADVANTAGEOUS EFFECTS OF SECOND EMBODIMENT]

According to the calibration system of Fig. 17, a plurality of sets of correction coefficients are calculated using the plurality of reflectors 24-1 to 24-K. Hence, it is possible to calibrate the radar device 12 with higher accuracy, and detect a reflecting object with higher accuracy, than in the case of using one reflector 24.

[THIRD EMBODIMENT]

[CONFIGURATION OF THIRD EMBODIMENT]

While the first and second embodiments describe the case of calibrating the signal processing circuit 39, the third embodiment describes a case of calibrating another circuit portion of a radar device.
Fig. 21 is a block diagram illustrating a configuration of a radar device 12B of a calibration system according to a third embodiment. The calibration system according to the third embodiment is configured in a manner similar to that of the calibration system of Fig. 1, except that the vehicular apparatus 1 of Fig. 1 is provided with a radar device 12B of Fig. 21 instead of the radar device 12.
The radar device 12B is provided with an oscillator 31, a transmitter circuit 60B, antenna elements 32-1 to 32-M, antenna elements 33-1 to 33-N, a receiver circuit 70B, a signal processing circuit 39B, a storage device 40, and a control circuit 41B.
The transmitter circuit 60B includes phase shifters 61-1 to 61-M and amplifiers 62-1 to 62-M. The phase shifters 61-1 to 61-M change the phases of the radio frequency signals under the control of the control circuit 41B. The amplifiers 62-1 to 62-M have variable gains, and change the amplitudes of the radio frequency signals under the control of the control circuit 41B. The antenna elements 32-1 to 32-M emit radio frequency signals having changed phases and amplitudes. As a result, the radar device 12B transmits radar waves with the main beam directed in a desired direction.
The antenna elements 32-1 to 32-M that transmit radar waves may be configured as, for example, a linear array antenna device in which the antenna elements are arranged at intervals of 1/2 of the operating wavelength.
The receiver circuit 70B is provided with a radio frequency circuit 80, phase shifters 34-1 to 34-N, mixers 35-1-1 to 35-N-2, amplifiers 36-1-1 to 36-N-2, filters 37-1-1 to 37-N-2, and analog-to-digital converters (ADC) 38-1-1 to 38-N-2. The radio frequency circuit 80 includes amplifiers 81-1 to 81-N and phase shifters 82-1 to 82-N. The amplifiers 81-1 to 81-N have variable gains, and change the amplitudes of the received radio frequency signals (radar waves) under the control of the control circuit 41B. The phase shifters 82-1 to 82-N change the phases of the radio frequency signals under the control of the control circuit 41B. As a result, the radar device 12B receives the arriving radar waves with the main beam directed in a desired direction. The other components of the receiver circuit 70B are configured in a manner similar to that of the corresponding components of the receiver circuit 70 of Fig. 3.
The signal processing circuit 39B estimates the distance and direction of a reflecting object, based on the I/Q signals outputted from the analog-to-digital converters 38-1-1 to 38-N-2, and notifies the control device 11 of the vehicular apparatus 1, of the estimated distance and direction.
The control circuit 41B controls overall operations of the radar device 12B. In addition, the control circuit 41B calculates correction coefficients for calibrating the radar device 12B, based on the I/Q signals outputted from the analog-to-digital converters 38-1-1 to 38-N-2, and stores the correction coefficients in the storage device 40. The correction coefficients include, for example, the gains of the amplifiers 81-1 to 81-N, and the phase shifts of the phase shifters 82-1 to 82-N. In addition, the control circuit 41B reads the correction coefficients from the storage device 40, and sets the correction coefficients for the signal processing circuit 39B.
According to the third embodiment, in order to calibrate the radar device 12B, the gains of the amplifiers 81-1 to 81-N and the phase shifts of the phase shifters 82-1 to 82-N of the receiver circuit 70B are corrected, instead of correcting the received signals and the estimated distance using software signal processing of the signal processing circuit 39B.

[OPERATION OF THIRD EMBODIMENT]

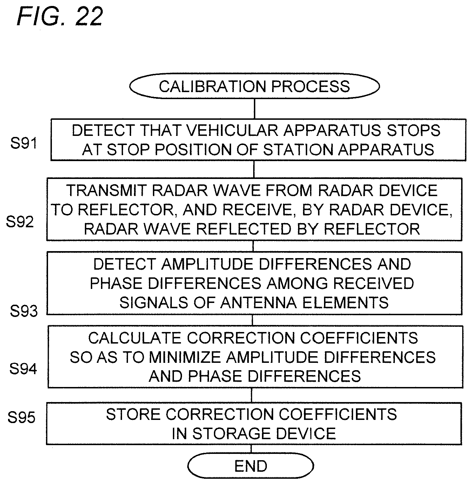

Fig. 22 is a flowchart illustrating calibration process executed by the radar device 12B of Fig. 21.
In step S91, the control circuit 41B detects that the vehicular apparatus 1 is stopping at the stop position of the station apparatus 2.
In step S92, the radar device 12B transmits a radar wave to the reflector 24, and receives the radar wave reflected by the reflector 24.

In step S93, the signal processing circuit 39B detects differences in amplitude and differences in phase among the received signals of the antenna elements 33-1 to 33-N.

In step S94, the control circuit 41B calculates correction coefficients that minimizes the differences in amplitude and the differences in phase, with reference to the received signal of one of the antenna elements. In step S95, the control circuit 41B stores the correction coefficients in the storage device 40.

By executing the calibration process of Fig. 22, the radar device 12B can calibrate the radio frequency circuit 80 of the receiver circuit 70B so as to minimize an error between the estimated distance and the known distance, and so as to minimize an error between the estimated direction and the known direction.

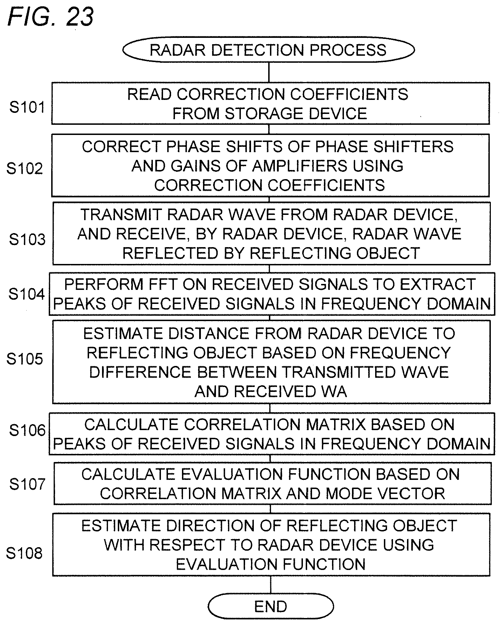

Fig. 23 is a flowchart illustrating radar detection process executed by the radar device 12B of Fig. 21.

In step S101, the control circuit 41B reads the correction coefficient from the storage device 40. In step S102, the control circuit 41B corrects the phase shifts of the phase shifters 82-1 to 82-N and the gains of the amplifiers 81-1 to 81-N using the correction coefficients.

In step S103, the radar device 12B transmits a radar wave, and receives the radar wave reflected by a reflecting object.

In step S104, the signal processing circuit 39B performs FFT on each of the received signals of the antenna elements 33-1 to 33-N, and further extracts peaks of the received signals of the antenna elements 33-1 to 33-N in the frequency domain.

In step S105, the signal processing circuit 39B estimates the distance from the radar device 12 to the reflecting object, based on the difference between the frequency of the transmitted radar waves and the frequency of the received radar waves.

In step S106, the signal processing circuit 39B calculates a correlation matrix R using Mathematical Expression (8), based on the peaks of the received signals of the antenna elements 33-1 to 33-N in the frequency domain. In step S107, the signal processing circuit 39B calculates an evaluation function P(θ) based on the correlation matrix R and the mode vector a(θ).

For example, the evaluation function P(θ) is given as follows.
[Mathematical Expression 25]

$$P(\theta) = \frac{a^H(\theta) \, R \, a(\theta)}{a^H(\theta) \, a(\theta)} \qquad (25)$$

In step S108, the signal processing circuit 39B estimates the direction of the reflecting object with respect to the radar device 12, using the evaluation function P(θ) calculated in step S107.

Thereafter, the signal processing circuit 39B notifies the control device 11 of the vehicular apparatus 1, of the estimated distance and direction.

By executing the radar detection process of Fig. 23, the radar device 12B can minimize an error between the estimated distance and the known distance, minimize an error between the estimated direction and the known direction, and accurately detect the distance and direction of the reflecting object.

[ADVANTAGEOUS EFFECTS OF THIRD EMBODIMENT]

According to the calibration system of the third embodiment, since necessary components for recalibration of the radar device 12B are incorporated into the station apparatus 2, it is possible to easily calibrate the receiver circuit 70B of the radar device 12B with less efforts than the prior art.

However, in a high frequency band such as 79 GHz, it is difficult to control the amplifiers 81-1 to 81-N and the phase shifters 82-1 to 82-N with high accuracy. On the other hand, by correcting the received signals and the estimated distance using software signal processing of the signal processing circuit 39 as in the first and second embodiments, it is possible to estimate the direction and distance of a reflecting object with high accuracy even in a high frequency band.

[FOURTH EMBODIMENT]

[CONFIGURATION OF FOURTH EMBODIMENT]

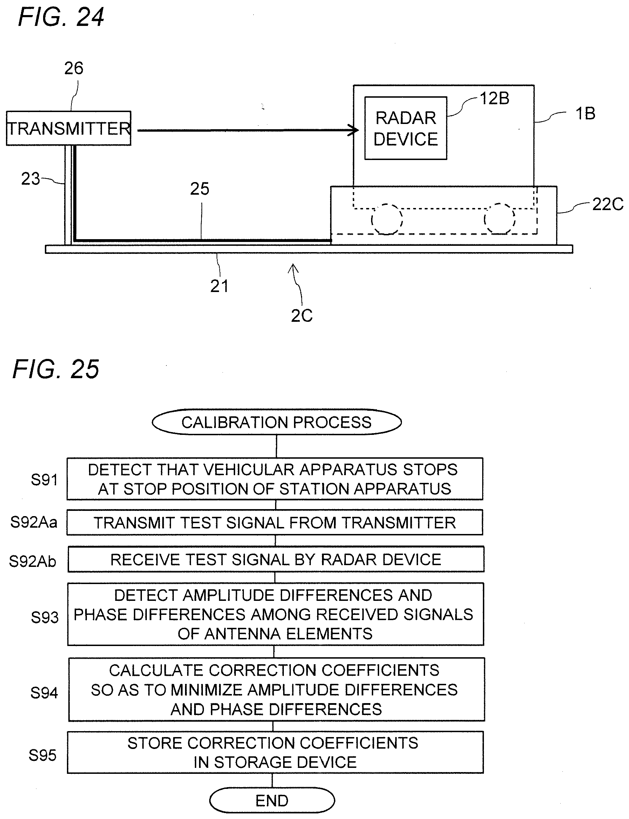

Fig. 24 is a side view illustrating a configuration of a calibration system according to a fourth embodiment. The calibration system of Fig. 24 is provided with a vehicular apparatus 1B and a station apparatus 2C.

The station apparatus 2C is provided with a charger apparatus 22C and a transmitter 26, instead of the charger apparatus 22 and the reflector 24 of Fig. 1. The transmitter 26 is connected to the charger apparatus 22C via a signal line 25, and generates a radio signal under the control of the charger apparatus 22C or the radar device 12B. The transmitter 26 generates a radio signal, when the vehicular apparatus 1B is stopping at a stop position of the station apparatus 2C. Hence, when the vehicular apparatus 1B is stopping at the stop position of the station apparatus 2C, the charger apparatus 22C or the radar device 12B transmits a control signal to the transmitter 26 via the signal line 25. Thus, when calibrating the radar device 12B, the radar device 12B and the transmitter 26 operate in synchronization with each other.

The vehicular apparatus 1B of Fig. 24 is configured in a manner similar to that of the vehicular apparatus 1 of Fig. 1, except that the radar device 12B of Fig. 21 is provided instead of the radar device 12 of Fig. 1. In addition, the radar device 12B of Fig. 24 is configured in a manner similar to that of the radar device 12B of Fig. 21, except for executing calibration process of Fig. 25.

[OPERATION OF FOURTH EMBODIMENT]

Fig. 25 is a flowchart illustrating the calibration process executed by the radar device 12B of Fig. 24. In the calibration process of Fig. 25, the radar device 12B executes steps S92Aa and S92Ab of Fig. 25, instead of step S92 of Fig. 22. In step S92Aa, the control circuit 41 transmits a control signal to the transmitter 26 via the charger apparatus 22C and the signal line 25, and accordingly, the transmitter 26 transmits a test signal. In step S92Ab, the radar device 12B receives the test signal. The signal processing circuit 39 of the radar device 12B executes subsequent steps based on the received test signal.

[ADVANTAGEOUS EFFECTS OF FOURTH EMBODIMENT]

According to the calibration system of the fourth embodiment, since necessary components for recalibration of the radar device 12B are incorporated into the station apparatus 2C, it is possible to easily calibrate the radar device 12B with less efforts than the prior art, in a manner similar to those of the first to third embodiments.

[FIFTH EMBODIMENT]

[CONFIGURATION OF FIFTH EMBODIMENT]

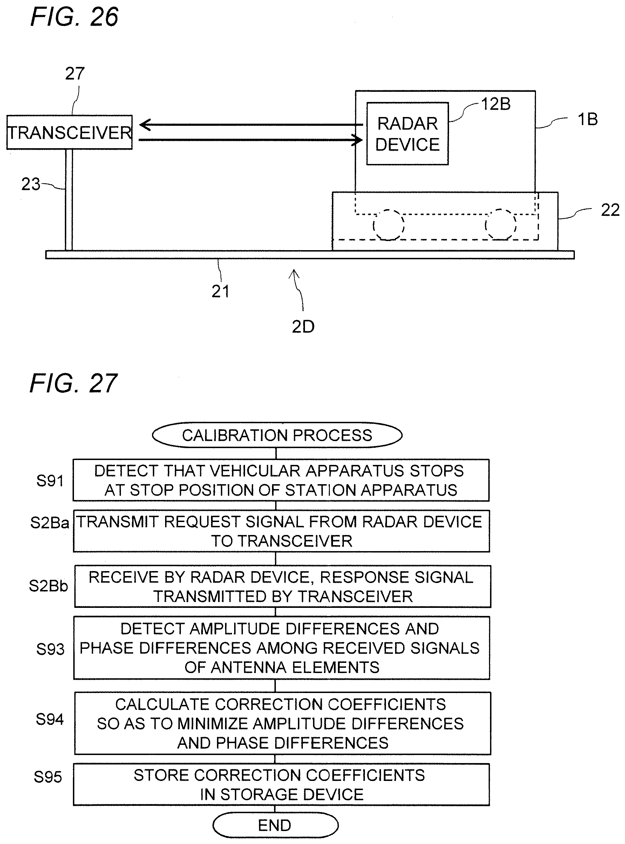

Fig. 26 is a side view illustrating a configuration of a calibration system according to a fifth embodiment. The calibration system of Fig. 26 is provided with the vehicular apparatus 1B and a station apparatus 2D.

The station apparatus 2D is provided with a transceiver 27 instead of the reflector 24 of Fig. 1. When the transceiver 27 receives a request signal (first radio signal), the transceiver 27 transmits a response signal (second radio signal). Thus, when calibrating the radar device 12B, the radar device 12B and the transceiver 27 operate in synchronization with each other.

The vehicular apparatus 1B of Fig. 26 is configured in a manner similar to that of the vehicular apparatus 1 of Fig. 1, except that the radar device 12B of Fig. 21 is provided instead of the radar device 12 of Fig. 1. In addition, the radar device 12B of Fig. 26 is configured in a manner similar to that of the radar device 12B of Fig. 21, except for executing calibration process of Fig. 27.

[OPERATION OF FIFTH EMBODIMENT]

Fig. 27 is a flowchart illustrating the calibration process executed by the radar device 12B of Fig. 26. In the calibration process of Fig. 27, the radar device 12B executes steps S92Ba and S92Bb of Fig. 27, instead of step S92 of Fig. 22. In step S92Ba, the radar device 12B transmits a request signal to the transceiver 27. In step S92Bb, the radar device 12B receives the response signal transmitted by the transceiver 27. The signal processing circuit 39 of the radar device 12B executes subsequent steps based on the received response signal.

[ADVANTAGEOUS EFFECTS OF FIFTH EMBODIMENT]

According to the calibration system of the fifth embodiment, since necessary components for recalibration of the radar device 12B are incorporated into the station apparatus 2D, it is possible to easily calibrate the radar device 12B with less efforts than the prior art, in a manner similar to those of the first to fourth embodiments.

[SIXTH EMBODIMENT]

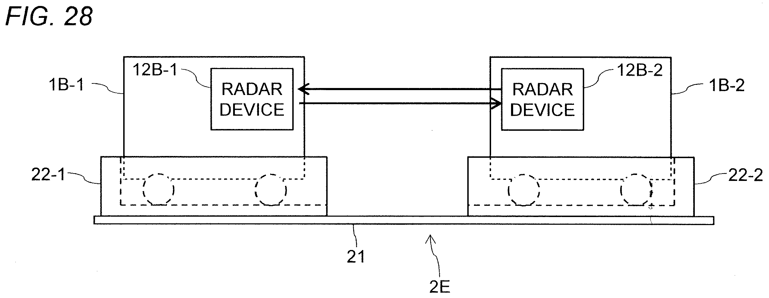

Fig. 28 is a side view illustrating a configuration of a calibration system according to a sixth embodiment. The calibration system of Fig. 27 is provided with two vehicular apparatuses 1B-1 and 1B-2 and a station apparatus 2E.

The station apparatus 2E is provided with the base plate 21 and two charger apparatuses 22-1 and 22-2. The charger apparatuses 22-1 and 22-2 are fixed to predetermined positions on the base plate 21, so that radar devices 12B-1 and 12B-2 of the vehicular apparatuses 1B-1 and 1B-2 oppose to each other, and can transmit and receive radar waves to and from each other.

The calibration system of Fig. 28 is equivalent to a configuration including the vehicular apparatus 1B and the charger apparatus 22, in place of the pole 23 and the reflector 24 of Fig. 1. The radar devices 12B-1 and 12B-2 of Fig. 28 can execute the calibration process of Fig. 27 using the opposing radar device 12B, instead of the transceiver 27 of Fig. 26.

According to the calibration system of the sixth embodiment, it is possible to easily calibrate the radar device 12B with less efforts than the prior art, in a manner similar to those of the first to fifth embodiments.

[MODIFIED EMBODIMENT]

In the first and second embodiments, the signal processing circuit 39 may store the mode vector $a_{actual}(\theta)$ corrected by the calibration matrix in the storage device 40, instead of storing the calibration matrix in the storage device 40.

In the fourth embodiment, it is possible to execute the calibration process and the radar detection process described in the first and second embodiments, by temporally synchronizing the transmitter 26 with the radar device 12B. Similarly, in the fifth embodiment, it is possible to execute the calibration process and the radar detection process described in the first and second embodiments, by temporally synchronizing the transceiver 27 with the radar device 12B. Similarly, in the sixth embodiment, it is possible to execute the calibration process and the radar detection process described in the first and second embodiments, by temporally synchronizing the radar devices 12B-1 and 12B-2.

The vehicular apparatus can be used not only with the station apparatus including the charger apparatus, but also any station apparatus having a predetermined stop position.

While Figs. 2 and 5 illustrate a case where the vehicular apparatus 1 and the charger apparatus 22 are configured to be connected via the connector for power transmission, the vehicular apparatus 1 and the charger apparatus 22 may be configured to transmit power in a non-contact manner.

While Figs. 3 and 4 illustrate a case of separately providing the antenna elements 32-1 to 32-M for transmitting radar waves, and the antenna elements 33-1 to 33-N for receiving radar waves, the antenna elements may be shared for transmitting and receiving radar waves.

While Fig. 4 illustrates a case where the radar device 12 is provided with one antenna element 32 for transmitting radar waves, and generates one set of the I signal and the Q signal, the embodiments are not limited thereto. The radar device according to the embodiment may be provided with a plurality of antenna elements for transmitting radar waves, and provided with a circuit that generates a plurality of sets of the I signal and the Q signal independent from one another, corresponding to these antenna elements.

The radar device 12B of Fig. 21 may be provided with only the antenna element 32 in a manner similar to that of the radar device 12 of Fig. 3, or the transmitter circuit 60 and the antenna element 32 in a manner similar to that of the radar device 12A of Fig. 4, instead of the transmitter circuit 60B and the antenna elements 32-1 to 32-M.

The radar device may measure a signal to noise ratio obtained when transmitting and receiving signals, and detect a failure of the radar device based on the measurements.

In addition, in order to improve the signal to noise ratio, radar waves may be repeatedly transmitted, and a plurality of radar waves reflected by a reflector or a reflecting object may be received and integrated.

INDUSTRIAL APPLICABILITY

The calibration system of the present disclosure is applicable to, for example, a radar device mounted on a vehicular apparatus, such as an automatic guided vehicle (AGV) or an autonomous intelligent vehicle (AIV).

REFERENCE SIGNS LIST

1: VEHICULAR APPARATUS
2, 2A to 2E: STATION APPARATUS
11: CONTROL DEVICE
12, 12A, 12B: RADAR DEVICE
13: CONNECTOR
14: RECHARGEABLE BATTERY
15: DRIVER DEVICE

21: BASE PLATE
22, 22C: CHARGER APPARATUS
23: POLE
24, 24A to 24C: REFLECTOR
25: SIGNAL LINE
26: TRANSMITTER
27: TRANSCEIVER
31: OSCILLATOR
32-1 to 32-M: ANTENNA ELEMENT
33-1 to 33-N: ANTENNA ELEMENT
35-1-1 to 35-N-2: MIXER
34-1 to 34-N: PHASE SHIFTER
36-1-1 to 36-N-2: AMPLIFIER
37-1-1 to 37-N-2: FILTER
38-1-1 to 38-N-2: ANALOG-TO-DIGITAL CONVERTER (ADC)
39: SIGNAL PROCESSING CIRCUIT
40: STORAGE DEVICE
41, 41A, 41B: CONTROL CIRCUIT
42-1, 42-2: DIGITAL-TO-ANALOG CONVERTER (DAC)
43-1, 43-2: FILTER
44: PHASE SHIFTER
45-1, 45-2: MIXER
51: POWER SUPPLY DEVICE
52: CHARGER CONTROL DEVICE
53: CONNECTOR
60, 60B: TRANSMITTER CIRCUIT
61-1 to 61-M: PHASE SHIFTER
62-1 to 62-M: AMPLIFIER
70, 70B: RECEIVER CIRCUIT
80: RADIO FREQUENCY CIRCUIT
81-1 to 81-N: AMPLIFIER
82-1 to 82-N: PHASE SHIFTER

## Claims

1.  A calibration system of a radar device (12, 12B), the calibration system comprising:

    a vehicular apparatus (1) comprising the radar device (12, 12B); and
    a station apparatus (2) having a predetermined stop position for the vehicular apparatus (1),
    **characterized in that** the station apparatus (2) comprises at least one signal source located at a predetermined position of the station apparatus (2), the signal source being configured to transmit a radio signal to the radar device (12, 12B), and
    wherein the radar device (12, 12B), comprises:

    a receiver circuit (70, 70B) configured to receive the radio signal from the signal source and output a received signal, when the vehicular apparatus (1) stops at the stop position of the station apparatus (2);
    a signal processing circuit (39, 39B) configured to estimate a distance and a direction of the signal source with respect to a position of the radar device (12, 12B), based on the received signal; and
    a control circuit (41, 41B) configured to calibrate the receiver circuit (70, 70B) or the signal processing circuit (39, 39B) based on a known distance and a known direction of the signal source with respect to a position of the radar device (12, 12B), of the vehicular apparatus (1) stopping at the stop position of the station apparatus (2), so as to minimize an error between the estimated distance and the known distance, and so as to minimize an error between the estimated direction and the known direction, and
    **characterised in that**
    the station apparatus (2) has a guide formed according to a shape of a housing of the vehicular apparatus (1), so that the vehicular apparatus (1) stops at the stop position.

2. The calibration system as claimed in claim 1,

   wherein the signal source is a reflector (24),
   wherein the radar device (12, 12B), further comprises a transmitter circuit configured to transmit a radio signal, and
   wherein the receiver circuit (70, 70B) is configured to receive the radio signal transmitted from the radar device (12, 12B), and reflected by the reflector (24), when the vehicular apparatus (1) stops at the stop position of the station apparatus (2).

3. The calibration system as claimed in claim 1,

   wherein the signal source is a transmitter (26) configured to generate a radio signal, and
   wherein the radar device (12, 12B), is configured to receive the radio signal generated by the transmitter (26), when the vehicular apparatus (1) stops at the stop position of the station apparatus (2).

4. The calibration system as claimed in claim 1,

   wherein the signal source is a transceiver (27) configured to receive a first radio signal, and transmit a second radio signal in response to the first radio signal,
   wherein the radar device (12, 12B), further comprises a transmitter circuit configured to transmit the first radio signal, when the vehicular apparatus (1) stops at the stop position of the station apparatus (2), and
   wherein the receiver circuit (70, 70B) is configured to receive the second radio signal received from the transceiver (27) in response to the first radio signal.

5. The calibration system as claimed in any one of claims 1 to 4,

   wherein the vehicular apparatus (1) comprises a rechargeable battery (14), and
   wherein the station apparatus (2) comprises a charger control device (52) connected to the rechargeable battery (14) of the vehicular apparatus (1) to enable charging, when the vehicular apparatus (1) stops at the stop position of the station apparatus (2).

6. The calibration system as claimed in any one of claims 1 to 5,

   wherein the radar device (12) comprises an array antenna device including a plurality of antenna elements (33-1 to 33-N), and
   wherein the control circuit (41) is configured to calibrate the signal processing circuit (39) by calculating correction coefficients for correcting the received signals of the antenna elements (31-1 to 33-N) using software signal processing, so as to minimize the error between the estimated distance and the known distance, and so as to minimize the error between the estimated direction and the known direction.

7. The calibration system as claimed in any one of claims 1 to 5,

   wherein the radar device (12B) further comprises an array antenna device including a plurality of antenna elements (31-1 to 33-N),
   wherein the receiver circuit (70B) comprises:

      a plurality of amplifiers (81-1 to 81-N) each configured to amplify a received signal of each antenna element with a variable gain; and
      a plurality of phase shifters (82-1 to 82-N) each configured to change a phase of the received signal of each antenna element with a variable phase shift, and
      wherein the control circuit (41) is configured to calibrate the receiver circuit (70B) by calculating correction coefficients for correcting the gains of the amplifiers (81-1 to 81-N) and the phase shifts of the phase shifters (82-1 to 82-N), so as to minimize the error between the estimated distance and the known distance, and so as to minimize the error between the estimated direction and the known direction.

8. The calibration system as claimed in any one of claims 1 to 5,

   wherein the calibration system comprises a plurality of signal sources located at a plurality of different positions of the station apparatus (2), so as to be positioned in different directions with respect to the stop position;

wherein the control circuit (41) is configured to calculate correction coefficients for correcting the received signal for each of the plurality of signal sources, based on known distances and known directions of the signal sources with respect to a position of the radar device (12) of the vehicular apparatus (1) stopping at the stop position of the station apparatus (2), so as to minimize errors among the estimated distances and the known distances, and so as to minimize errors among the estimated directions and the known directions;

wherein the radar device (12) further comprises a storage device (40) configured to store the correction coefficients in association with the directions of the signal sources;

wherein the radar device (12) further comprises a transmitter circuit configured to transmit a radio signal;

wherein the receiver circuit (70) is configured to receive the radio signal transmitted from the radar device (12) and reflected by a reflecting object, and output a received signal;

wherein the control circuit (41) is configured to read correction coefficients associated with one of the plurality of signal sources from the storage device (40), and correct the received signal using the read correction coefficients; and

wherein the signal processing circuit (39) is configured to estimate a distance and a direction of the reflecting object with respect to a position of the radar device (12) based on the corrected received signal.

9. A calibration method of a radar device (12, 12B), the method including:

stopping a vehicular apparatus (1) comprising the radar device (12, 12B), at a predetermined stop position for a station apparatus (2),

transmitting a radio signal from at least one signal source located at a predetermined position of the station apparatus (2) to the radar device (12, 12B),

receiving the radio signal and outputting a received signal by a receiver circuit (70, 70B) of the radar device (12, 12B),

estimating a distance and a direction of the signal source with respect to a position of the radar device (12, 12B), based on the received signal, by a signal processing circuit (39, 39B) of the radar device (12, 12B), and

calibrating the receiver circuit (70, 70B) or the signal processing circuit (39, 39B) based on a known distance and a known direction of the signal source with respect to a position of the radar device (12, 12B), of the vehicular apparatus (1) stopping at the stop position of the station apparatus (2), so as to minimize an error between the estimated distance and the known distance, and so as to minimize an error between the estimated direction and the known direction, and

**characterised in that**

the station apparatus (2) has a guide formed according to a shape of a housing of the vehicular apparatus (1), so that the vehicular apparatus (1) stops at the stop position.

**Patentansprüche**

1. Kalibrierungssystem einer Radarvorrichtung (12, 12B), wobei das Kalibrierungssystem Folgendes umfasst:

eine Fahrzeugeinrichtung (1), die die Radarvorrichtung (12, 12B) umfasst; und

eine Stationseinrichtung (2), die eine vorbestimmte Stoppposition für die Fahrzeugeinrichtung (1) aufweist,

**dadurch gekennzeichnet, dass** die Stationseinrichtung (2) mindestens eine Signalquelle umfasst, die sich an einer vorbestimmten Position der Stationseinrichtung (2) befindet, wobei die Signalquelle dazu konfiguriert ist, ein Funksignal an die Radarvorrichtung (12, 12B) zu übertragen, und

wobei die Radarvorrichtung (12, 12B) Folgendes umfasst:

eine Empfängerschaltung (70, 70B), die zum Empfangen des Funksignals von der Signalquelle und zum Ausgeben eines empfangenen Signals konfiguriert ist, wenn die Fahrzeugeinrichtung (1) an der Stoppposition der Stationseinrichtung (2) stoppt;

eine Signalverarbeitungsschaltung (39, 39B), die zum Schätzen einer Entfernung und einer Richtung der Signalquelle in Bezug auf eine Position der Radarvorrichtung (12, 12B) basierend auf dem empfangenen Signal konfiguriert ist; und

eine Steuerschaltung (41, 41B), die zum Kalibrieren der Empfängerschaltung (70, 70B) oder der Signalverarbeitungsschaltung (39, 39B) basierend auf einer bekannten Entfernung und einer bekannten Richtung der Signalquelle in Bezug auf eine Position der Radarvorrichtung (12, 12B) der Fahrzeugeinrichtung (1), die an der Stoppposition der Stationseinrichtung (2) stoppt, konfiguriert ist, um eine Abweichung zwischen der geschätzten Entfernung und der bekannten Entfernung zu minimieren und um eine Abweichung zwischen der geschätzten Richtung und der bekannten Richtung zu minimieren, und

**dadurch gekennzeichnet, dass** die Stationseinrichtung (2) eine Führung aufweist, die gemäß einer Form eines Gehäuses der Fahrzeugeinrichtung (1) ausgebildet ist, sodass die Fahrzeugeinrichtung (1) an der Stoppposition stoppt.

2.   Kalibrierungssystem nach Anspruch 1,

wobei die Signalquelle ein Reflektor (24) ist,

wobei die Radarvorrichtung (12, 12B) ferner eine Überträgerschaltung umfasst, die zum Übertragen eines Funksignals konfiguriert ist, und

wobei die Empfängerschaltung (70, 70B) zum Empfangen des von der Radarvorrichtung (12, 12B) übertragenen und durch den Reflektor (24) reflektierten Funksignals konfiguriert ist, wenn die Fahrzeugeinrichtung (1) an der Stoppposition der Stationseinrichtung (2) stoppt.

3.   Kalibrierungssystem nach Anspruch 1,

wobei die Signalquelle ein Überträger (26) ist, der zum Erzeugen eines Funksignals konfiguriert ist, und

wobei die Radarvorrichtung (12, 12B) zum Empfangen des durch den Überträger (26) erzeugten Funksignals konfiguriert ist, wenn die Fahrzeugeinrichtung (1) an der Stoppposition der Stationseinrichtung (2) stoppt.

4.   Kalibrierungssystem nach Anspruch 1,

wobei die Signalquelle ein Sendeempfänger (27) ist, der zum Empfangen eines ersten Funksignals und Übertragen eines zweiten Funksignals als Reaktion auf das erste Funksignal konfiguriert ist,

wobei die Radarvorrichtung (12, 12B) ferner eine Überträgerschaltung umfasst, die zum Übertragen des ersten Funksignals konfiguriert ist, wenn die Fahrzeugeinrichtung (1) an der Stoppposition der Stationseinrichtung (2) stoppt, und

wobei die Empfängerschaltung (70, 70B) zum Empfangen des zweiten Funksignals, das von dem Sendeempfänger (27) empfangen wird, als Reaktion auf das erste Funksignal konfiguriert ist.

5.   Kalibrierungssystem nach einem der Ansprüche 1 bis 4,

wobei die Fahrzeugeinrichtung (1) eine wiederaufladbare Batterie (14) umfasst und

wobei die Stationseinrichtung (2) eine Ladesteuerungsvorrichtung (52) umfasst, die mit der wiederaufladbaren Batterie (14) der Fahrzeugeinrichtung (1) verbunden ist, um ein Laden zu ermöglichen, wenn die Fahrzeugeinrichtung (1) an der Stoppposition der Stationseinrichtung (2) stoppt.

6.   Kalibrierungssystem nach einem der Ansprüche 1 bis 5,

wobei die Radarvorrichtung (12) eine Gruppenantennenvorrichtung umfasst, die eine Vielzahl von Antennenelementen (33-1 bis 33-N) enthält, und

wobei die Steuerschaltung (41) zum Kalibrieren der Signalverarbeitungsschaltung (39) durch Berechnen von Korrekturkoeffizienten zum Korrigieren der empfangenen Signale der Antennenelemente (31-1 bis 33-N) unter Verwendung von Softwaresignalverarbeitung konfiguriert ist, um die Abweichung zwischen der geschätzten Entfernung und der bekannten Entfernung zu minimieren und um die Abweichung zwischen der geschätzten Richtung und der bekannten Richtung zu minimieren.

7.   Kalibrierungssystem nach einem der Ansprüche 1 bis 5,

wobei die Radarvorrichtung (12B) ferner eine Gruppenantennenvorrichtung umfasst, die eine Vielzahl von Antennenelementen (31-1 bis 33-N) enthält,

wobei die Empfängerschaltung (70B) Folgendes umfasst:

eine Vielzahl von Verstärkern (81-1 bis 81-N), die jeweils dazu konfiguriert sind, ein empfangenes Signal jedes Antennenelements mit einem variablen Gain zu verstärken; und

eine Vielzahl von Phasenschiebern (82-1 bis 82-N), die jeweils dazu konfiguriert sind, eine Phase des empfangenen Signals jedes Antennenelements mit einer variablen Phasenverschiebung zu ändern, und

wobei die Steuerschaltung (41) zum Kalibrieren der Empfängerschaltung (70B) durch Berechnen von Korrekturkoeffizienten zum Korrigieren der Gains der Verstärker (81-1 bis 81-N) und der Phasenverschiebungen der Phasenschieber (82-1 bis 82-N) konfiguriert ist, um die Abweichung zwischen der geschätzten Entfernung und der bekannten Entfernung zu minimieren und um die Abweichung zwischen der geschätzten Richtung und der bekannten Richtung zu minimieren.

**8.** Kalibrierungssystem nach einem der Ansprüche 1 bis 5,

wobei das Kalibrierungssystem eine Vielzahl von Signalquellen umfasst, die sich an einer Vielzahl von verschiedenen Positionen der Stationseinrichtung (2) befinden, um in Bezug auf die Stoppposition in verschiedenen Richtungen positioniert zu sein;

wobei die Steuerschaltung (41) zum Berechnen von Korrekturkoeffizienten zum Korrigieren des empfangenen Signals für jede der Vielzahl von Signalquellen basierend auf bekannten Entfernungen und bekannten Richtungen der Signalquellen in Bezug auf eine Position der Radarvorrichtung (12) der Fahrzeugeinrichtung (1), die an der Stoppposition der Stationseinrichtung (2) stoppt, konfiguriert ist, um Abweichungen zwischen den geschätzten Entfernungen und den bekannten Entfernungen zu minimieren und um Abweichungen zwischen den geschätzten Richtungen und den bekannten Richtungen zu minimieren;

wobei die Radarvorrichtung (12) ferner eine Speichervorrichtung (40) umfasst, die dazu konfiguriert ist, die Korrekturkoeffizienten in Verbindung mit den Richtungen der Signalquellen zu speichern;

wobei die Radarvorrichtung (12) ferner eine Überträgerschaltung umfasst, die dazu konfiguriert ist, ein Funksignal zu übertragen;

wobei die Empfängerschaltung (70) zum Empfangen des von der Radarvorrichtung (12) übertragenen und durch ein reflektierendes Objekt reflektierten Funksignals und zum Ausgeben eines empfangenen Signals konfiguriert ist;

wobei die Steuerschaltung (41) zum Lesen von Korrekturkoeffizienten, die mit einer aus der Vielzahl von Signalquellen verbunden sind, aus der Speichervorrichtung (40) und zum Korrigieren des empfangenen Signals unter Verwendung der gelesenen Korrekturkoeffizienten konfiguriert ist; und

wobei die Signalverarbeitungsschaltung (39) zum Schätzen einer Entfernung und einer Richtung des reflektierenden Objekts in Bezug auf eine Position der Radarvorrichtung (12) basierend auf dem korrigierten empfangenen Signal konfiguriert ist.

**9.** Kalibrierungsverfahren einer Radarvorrichtung (12, 12B), wobei das Verfahren Folgendes enthält:

Stoppen einer Fahrzeugeinrichtung (1), die die Radarvorrichtung (12, 12B) umfasst, an einer vorbestimmten Stoppposition für eine Stationseinrichtung (2),

Übertragen eines Funksignals von mindestens einer Signalquelle, die sich an einer vorbestimmten Position der Stationseinrichtung (2) befindet, an die Radarvorrichtung (12, 12B),

Empfangen des Funksignals und Ausgeben eines empfangenen Signals durch eine Empfängerschaltung (70, 70B) der Radarvorrichtung (12, 12B),

Schätzen einer Entfernung und einer Richtung der Signalquelle in Bezug auf eine Position der Radarvorrichtung (12, 12B) basierend auf dem empfangenen Signal durch eine Signalverarbeitungsschaltung (39, 39B) der Radarvorrichtung (12, 12B) und

Kalibrieren der Empfängerschaltung (70, 70B) oder der Signalverarbeitungsschaltung (39, 39B) basierend auf einer bekannten Entfernung und einer bekannten Richtung der Signalquelle in Bezug auf eine Position der Radarvorrichtung (12, 12B) der Fahrzeugeinrichtung (1), die an der Stoppposition der Stationseinrichtung (2) stoppt, um eine Abweichung zwischen der geschätzten Entfernung und der bekannten Entfernung zu minimieren und um eine Abweichung zwischen der geschätzten Richtung und der bekannten Richtung zu minimieren, und **dadurch gekennzeichnet, dass** die Stationseinrichtung (2) eine Führung aufweist, die gemäß einer Form eines Gehäuses der Fahrzeugeinrichtung (1) ausgebildet ist, sodass die Fahrzeugeinrichtung (1) an der Stoppposition stoppt.

## Revendications

**1.** Système d'étalonnage d'un dispositif radar (12, 12B), le système d'étalonnage comprenant :

un appareil véhiculaire (1) comprenant le dispositif radar (12, 12B) ; et
un appareil de station (2) comportant une position d'arrêt prédéterminée pour l'appareil véhiculaire (1),

**caractérisé en ce que** l'appareil de station (2) comprend au moins une source de signal située à une position prédéterminée de l'appareil de station (2), la source de signal étant configurée pour transmettre un signal radio au dispositif radar (12, 12B), et

dans lequel le dispositif radar (12, 12B) comprend :

un circuit récepteur (70, 70B) configuré pour recevoir le signal radio en provenance de la source de signal et émettre un signal reçu, lorsque l'appareil véhiculaire (1) s'arrête à la position d'arrêt de l'appareil de station (2) ;

un circuit de traitement de signal (39, 39B) configuré pour estimer une distance et une direction de la source de signal par rapport à une position du dispositif radar (12, 12B), sur la base du signal reçu ; et

un circuit de commande (41, 41B) configuré pour étalonner le circuit récepteur (70, 70B) ou le circuit de traitement de signal (39, 39B) sur la base d'une distance connue et d'une direction connue de la source de signal par rapport à une position du dispositif radar (12, 12B), de l'appareil véhiculaire (1) s'arrêtant à la position d'arrêt de l'appareil de station (2), de manière à minimiser une erreur entre la distance estimée et la distance connue, et de manière à minimiser une erreur entre la direction estimée et la direction connue, et **caractérisé en ce que** l'appareil de station (2) comporte un guide formé selon une forme d'un boîtier de l'appareil véhiculaire (1), de sorte que l'appareil véhiculaire (1) s'arrête à la position d'arrêt.

2. Système d'étalonnage selon la revendication 1,

dans lequel la source de signal est un réflecteur (24),

dans lequel le dispositif radar (12, 12B) comprend en outre un circuit émetteur configuré pour transmettre un signal radio, et

dans lequel le circuit récepteur (70, 70B) est configuré pour recevoir le signal radio transmis depuis le dispositif radar (12, 12B), et réfléchi par le réflecteur (24), lorsque l'appareil véhiculaire (1) s'arrête à la position d'arrêt de l'appareil de station (2).

3. Système d'étalonnage selon la revendication 1,

dans lequel la source de signal est un émetteur (26) configuré pour générer un signal radio, et

dans lequel le dispositif radar (12, 12B) est configuré pour recevoir le signal radio généré par l'émetteur (26), lorsque l'appareil véhiculaire (1) s'arrête à la position d'arrêt de l'appareil de station (2).

4. Système d'étalonnage selon la revendication 1,

dans lequel la source de signal est un émetteur (27) configuré pour recevoir un premier signal radio, et émettre un deuxième signal radio en réponse au premier signal radio,

dans lequel le dispositif radar (12, 12B) comprend en outre un circuit émetteur configuré pour transmettre le premier signal radio, lorsque l'appareil véhiculaire (1) s'arrête à la position d'arrêt de l'appareil de station (2), et

dans lequel le circuit récepteur (70, 70B) est configuré pour recevoir le deuxième signal radio reçu en provenance de l'émetteur (27) en réponse au premier signal radio.

5. Système d'étalonnage selon l'une quelconque des revendications 1 à 4,

dans lequel l'appareil véhiculaire (1) comprend une batterie rechargeable (14), et

dans lequel l'appareil de station (2) comprend un dispositif de commande de chargeur (52) connecté à la batterie rechargeable (14) de l'appareil véhiculaire (1) pour permettre le chargement, lorsque l'appareil véhiculaire (1) s'arrête à la position d'arrêt de l'appareil de station (2).

6. Système d'étalonnage selon l'une quelconque des revendications 1 à 5,

dans lequel le dispositif radar (12) comprend un dispositif d'antenne réseau comprenant une pluralité d'éléments d'antenne (33-1 à 33-N), et

dans lequel le circuit de commande (41) est configuré pour étalonner le circuit de traitement de signal (39) en calculant des coefficients de correction pour corriger les signaux reçus des éléments d'antenne (31-1 à 33-N) à l'aide d'un traitement de signal logiciel, de manière à minimiser l'erreur entre la distance estimée et la distance connue, et de manière à minimiser l'erreur entre la direction estimée et la direction connue.

**7.** Système d'étalonnage selon l'une quelconque des revendications 1 à 5,

dans lequel le dispositif radar (12B) comprend en outre un dispositif d'antenne réseau comprenant une pluralité d'éléments d'antenne (31-1 à 33-N),

dans lequel le circuit récepteur (70B) comprend :

une pluralité d'amplificateurs (81-1 à 81-N) chacun configuré pour amplifier un signal reçu de chaque élément d'antenne avec un gain variable ; et

une pluralité de déphaseurs (82-1 à 82-N) chacun configuré pour changer une phase du signal reçu de chaque élément d'antenne avec un déphasage variable, et

dans lequel le circuit de commande (41) est configuré pour étalonner le circuit récepteur (70B) en calculant des coefficients de correction pour corriger les gains des amplificateurs (81-1 à 81-N) et les déphasages des déphaseurs (82-1 à 82-N), de manière à minimiser l'erreur entre la distance estimée et la distance connue, et de manière à minimiser l'erreur entre la direction estimée et la direction connue.

**8.** Système d'étalonnage selon l'une quelconque des revendications 1 à 5,

dans lequel le système d'étalonnage comprend une pluralité de sources de signal situées à une pluralité de positions différentes de l'appareil de station (2), de manière à être positionnées dans des directions différentes par rapport à la position d'arrêt ;

dans lequel le circuit de commande (41) est configuré pour calculer des coefficients de correction pour corriger le signal reçu pour chacune de la pluralité de sources de signal, sur la base de distances connues et de directions connues des sources de signal par rapport à une position du dispositif radar (12) de l'appareil véhiculaire (1) s'arrêtant à la position d'arrêt de l'appareil de station (2), de manière à minimiser les erreurs parmi les distances estimées et les distances connues, et de manière à minimiser les erreurs parmi les directions estimées et les directions connues ;

dans lequel le dispositif radar (12) comprend en outre un dispositif de stockage (40) configuré pour stocker les coefficients de correction en association avec les directions des sources de signal ;

dans lequel le dispositif radar (12) comprend en outre un circuit émetteur configuré pour transmettre un signal radio ;

dans lequel le circuit récepteur (70) est configuré pour recevoir le signal radio transmis depuis le dispositif radar (12) et réfléchi par un objet réfléchissant, et émettre un signal reçu ;

dans lequel le circuit de commande (41) est configuré pour lire des coefficients de correction associés à l'une de la pluralité de sources de signal à partir du dispositif de stockage (40), et corriger le signal reçu à l'aide des coefficients de correction lus ; et

dans lequel le circuit de traitement de signal (39) est configuré pour estimer une distance et une direction de l'objet réfléchissant par rapport à une position du dispositif radar (12) sur la base du signal reçu corrigé.

**9.** Procédé d'étalonnage d'un dispositif radar (12, 12B), le procédé comprenant :

l'arrêt d'un appareil véhiculaire (1) comprenant le dispositif radar (12, 12B), à une position d'arrêt prédéterminée pour un appareil de station (2),

la transmission d'un signal radio en provenance d'au moins une source de signal située à une position prédéterminée de l'appareil de station (2), au dispositif radar (12, 12B),

la réception du signal radio et l'émission d'un signal reçu par un circuit récepteur (70, 70B) du dispositif radar (12, 12B),

l'estimation d'une distance et d'une direction de la source de signal par rapport à une position du dispositif radar (12, 12B), sur la base du signal reçu, par un circuit de traitement de signal (39, 39B) du dispositif radar (12, 12B), et

l'étalonnage du circuit récepteur (70, 70B) ou du circuit de traitement de signal (39, 39B) sur la base d'une distance connue et d'une direction connue de la source de signal par rapport à une position du dispositif radar (12, 12B), de l'appareil véhiculaire (1) s'arrêtant à la position d'arrêt de l'appareil de station (2), de manière à minimiser une erreur entre la distance estimée et la distance connue, et de manière à minimiser une erreur entre la direction estimée et la direction connue, et

**caractérisé en ce que** l'appareil de station (2) comporte un guide formé selon une forme d'un boîtier de l'appareil véhiculaire (1), de sorte que l'appareil véhiculaire (1) s'arrête à la position d'arrêt.

*FIG. 1*

*FIG. 2*

FIG. 3

FIG. 4

EP 4 063 895 B1

*FIG. 5*

*FIG. 6*     <u>24</u>

*FIG. 7*     <u>24A</u>

FIG. 8

FIG. 9

## FIG. 10

## FIG. 11

```
CALIBRATION PROCESS
```

S1 | DETECT THAT VEHICULAR APPARATUS STOPS
AT STOP POSITION OF STATION APPARATUS

S2 | TRANSMIT RADAR WAVE FROM RADAR DEVICE
TO REFLECTOR, AND RECEIVE, BY RADAR DEVICE,
RADAR WAVE REFLECTED BY REFLECTOR

S3 | PERFORM FFT ON RECEIVED SIGNALS
TO EXTRACT PEAKS OF RECEIVED SIGNALS
IN FREQUENCY DOMAIN

S4 | ESTIMATE DISTANCE FROM RADAR DEVICE
TO REFLECTOR BASED ON FREQUENCY
DIFFERENCE BETWEEN TRANSMITTED WAVE
AND RECEIVED WAVE

S5 | CALCULATE DISTANCE CORRECTION
COEFFICIENT BASED ON DISTANCE OF REFLECTOR

S6 | CALCULATE CORRELATION MATRIX
BASED ON PEAKS OF RECEIVED SIGNALS
IN FREQUENCY DOMAIN

S7 | PERFORM EIGENVALUE DECOMPOSITION
ON CORRELATION MATRIX TO EXTRACT
FIRST EIGENVECTOR

S8 | CALCULATE CORRECTION MATRIX BASED ON
FIRST EIGENVECTOR AND MODE VECTOR

S9 | STORE DISTANCE CORRECTION COEFFICIENT
AND CORRECTION MATRIX IN STORAGE DEVICE

```
END
```

*FIG. 12*

TRANSMITTED RADAR WAVE    RECEIVED RADAR WAVE

FREQUENCY

f2

$f_d$

f1

t1   t2   t3   t4   TIME

*FIG. 13*

FREQUENCY    I/Q SIGNAL

$f_d$

0

t1   t2   t3   TIME

*FIG. 14*

SIGNAL LEVEL

0

0   $f_d$   FREQUENCY

# FIG. 15

```
        ┌─────────────────────────────────────┐
        │      RADAR DETECTION PROCESS         │
        └─────────────────────────────────────┘
                          │
┌─────┬──────────────────────────────────────────────┐
│ S11 │ TRANSMIT RADAR WAVE FROM RADAR DEVICE,        │
│     │ AND RECEIVE, BY RADAR DEVICE, RADAR           │
│     │ WAVE REFLECTED BY REFLECTING OBJECT           │
└─────┴──────────────────────────────────────────────┘
                          │
┌─────┬──────────────────────────────────────────────┐
│ S12 │ READ DISTANCE CORRECTION COEFFICIENT AND      │
│     │ CORRECTION MATRIX FROM STORAGE DEVICE         │
└─────┴──────────────────────────────────────────────┘
                          │
┌─────┬──────────────────────────────────────────────┐
│ S13 │ PERFORM FFT ON RECEIVED SIGNALS               │
│     │ TO EXTRACT PEAKS OF RECEIVED SIGNALS          │
│     │ IN FREQUENCY DOMAIN                           │
└─────┴──────────────────────────────────────────────┘
                          │
┌─────┬──────────────────────────────────────────────┐
│ S14 │ ESTIMATE DISTANCE FROM RADAR DEVICE           │
│     │ TO REFLECTING OBJECT BASED ON                 │
│     │ FREQUENCY DIFFERENCE BETWEEN                  │
│     │ TRANSMITTED WAVE AND RECEIVED WAVE            │
└─────┴──────────────────────────────────────────────┘
                          │
┌─────┬──────────────────────────────────────────────┐
│ S15 │ CORRECT ESTIMATED DISTANCE USING              │
│     │ DISTANCE CORRECTION COEFFICIENT               │
└─────┴──────────────────────────────────────────────┘
                          │
┌─────┬──────────────────────────────────────────────┐
│ S16 │ CALCULATE CORRELATION MATRIX                  │
│     │ BASED ON PEAKS OF RECEIVED SIGNALS            │
│     │ IN FREQUENCY DOMAIN                           │
└─────┴──────────────────────────────────────────────┘
                          │
┌─────┬──────────────────────────────────────────────┐
│ S17 │ CALCULATE EVALUATION FUNCTION                 │
│     │ BASED ON CORRELATION MATRIX, MODE             │
│     │ VECTOR, AND CORRECTION MATRIX                 │
└─────┴──────────────────────────────────────────────┘
                          │
┌─────┬──────────────────────────────────────────────┐
│ S18 │ ESTIMATE DIRECTION OF REFLECTING              │
│     │ OBJECT WITH RESPECT TO RADAR DEVICE           │
│     │ USING EVALUATION FUNCTION                     │
└─────┴──────────────────────────────────────────────┘
                          │
                  ┌───────────────┐
                  │      END      │
                  └───────────────┘
```

FIG. 16

FIG. 17

## FIG. 18

CALIBRATION PROCESS

S21 — DETECT THAT VEHICULAR APPARATUS STOPS AT STOP POSITION OF STATION APPARATUS

S22 — TRANSMIT RADAR WAVE FROM RADAR DEVICE TO REFLECTOR, AND RECEIVE, BY RADAR DEVICE, RADAR WAVES REFLECTED BY REFLECTORS

S23 — PERFORM FFT ON RECEIVED SIGNALS TO EXTRACT PEAKS OF RECEIVED SIGNALS IN FREQUENCY DOMAIN

S24 — ESTIMATE DISTANCE FROM RADAR DEVICE TO REFLECTING OBJECT BASED ON FREQUENCY DIFFERENCE BETWEEN TRANSMITTED WAVE AND RECEIVED WAVE

S25 — SELECT ONE REFLECTOR

S26 — CALCULATE DISTANCE CORRECTION COEFFICIENT BASED ON DISTANCE OF SELECTED REFLECTOR

S27 — BASED ON DISTANCE OF SELECTED REFLECTOR, SELECT PEAK OF RECEIVED SIGNAL IN FREQUENCY DOMAIN, CORRESPONDING TO SELECTED REFLECTOR

S28 — CALCULATE CORRELATION MATRIX BASED ON PEAKS OF RECEIVED SIGNALS IN FREQUENCY DOMAIN

S29 — PERFORM EIGENVALUE DECOMPOSITION ON CORRELATION MATRIX TO EXTRACT FIRST EIGENVECTOR

S30 — CALCULATE CORRECTION MATRIX BASED ON FIRST EIGENVECTOR AND MODE VECTOR

S31 — STORE DISTANCE CORRECTION COEFFICIENT AND CORRECTION MATRIX IN STORAGE DEVICE IN ASSOCIATION WITH DIRECTION OF SELECTED REFLECT

S32 — ARE DISTANCE CORRECTION COEFFICIENT AND CORRECTION MATRIX CALCULATED FOR ALL REFLECTORS?

NO

YES

END

## FIG. 19

```
      ( RADAR DETECTION PROCESS )
```

**S41** | TRANSMIT RADAR WAVE FROM RADAR DEVICE, AND RECEIVE, BY RADAR DEVICE, RADAR WAVE REFLECTED BY REFLECTING OBJECT

**S42** | PERFORM FFT ON RECEIVED SIGNALS TO EXTRACT PEAKS OF RECEIVED SIGNALS IN FREQUENCY DOMAIN

**S43** | ESTIMATE DISTANCE FROM RADAR DEVICE TO REFLECTING OBJECT BASED ON FREQUENCY DIFFERENCE BETWEEN TRANSMITTED WAVE AND RECEIVED WAVE

**S44** | CALCULATE CORRELATION MATRIX BASED ON PEAKS OF RECEIVED SIGNALS IN FREQUENCY DOMAIN

**S49** | SET NEXT DIRECTION

**S45** | SET INITIAL VALUE OF DIRECTION

**S46** | READ FROM STORAGE DEVICE, CORRECTION MATRIX CORRESPONDING TO DIRECTION CLOSEST TO CURRENT DIRECTION

**S47** | CALCULATE EVALUATION FUNCTION BASED ON CORRELATION MATRIX, MODE VECTOR, AND CORRECTION MATRIX

**S48** | IS EVALUATION FUNCTION CALCULATED FOR ALL DIRECTIONS?   NO   YES

**S50** | ESTIMATE DIRECTION OF REFLECTING OBJECT WITH RESPECT TO RADAR DEVICE USING EVALUATION FUNCTION

**S51** | READ FROM STORAGE DEVICE, DISTANCE CORRECTION COEFFICIENT CORRESPONDING TO DIRECTION CLOSEST TO ESTIMATED DIRECTION

**S52** | CORRECT ESTIMATED DISTANCE USING DISTANCE CORRECTION COEFFICIENT

```
              ( END )
```

# FIG. 20

( CALIBRATION PROCESS )

S61 | DETECT THAT VEHICULAR APPARATUS STOPS AT STOP POSITION OF STATION APPARATUS

S62 | TRANSMIT RADAR WAVE FROM RADAR DEVICE TO REFLECTOR, AND RECEIVE, BY RADAR DEVICE, RADAR WAVE REFLECTED BY REFLECTOR

S63 | PERFORM FFT ON RECEIVED SIGNALS TO EXTRACT PEAKS OF RECEIVED SIGNALS IN FREQUENCY DOMAIN

S64 | ESTIMATE DISTANCE FROM RADAR DEVICE TO REFLECTING OBJECT BASED ON FREQUENCY DIFFERENCE BETWEEN TRANSMITTED WAVE AND RECEIVED WAVE

S65 | CALCULATE DISTANCE CORRECTION COEFFICIENT BASED ON DISTANCE OF REFLECTOR

S66 | SELECT ONE REFLECTOR

S67 | BASED ON DISTANCE OF SELECTED REFLECTOR, SELECT PEAK OF RECEIVED SIGNAL IN FREQUENCY DOMAIN, CORRESPONDING TO SELECTED REFLECTOR

S68 | CALCULATE CORRELATION MATRIX BASED ON PEAKS OF RECEIVED SIGNALS IN FREQUENCY DOMAIN

S69 | PERFORM EIGENVALUE DECOMPOSITION ON CORRELATION MATRIX TO EXTRACT EIGENVECTORS OTHER THAN FIRST EIGENVECTOR

S70 | ARE EIGENVECTORS CALCULATED FOR ALL REFLECTORS? — NO

YES

S71 | SOLVE SIMULTANEOUS EQUATIONS INCLUDING ELEMENTS OF EIGENVECTORS EXTRACTED FOR REFLECTORS, MODE VECTOR, AND CORRECTION MATRIX, TO CALCULATE CORRECTION MATRIX

S72 | STORE DISTANCE CORRECTION COEFFICIENT AND CORRECTION MATRIX IN STORAGE DEVICE

( END )

FIG. 21

EP 4 063 895 B1

## FIG. 22

CALIBRATION PROCESS

S91 | DETECT THAT VEHICULAR APPARATUS STOPS AT STOP POSITION OF STATION APPARATUS

S92 | TRANSMIT RADAR WAVE FROM RADAR DEVICE TO REFLECTOR, AND RECEIVE, BY RADAR DEVICE, RADAR WAVE REFLECTED BY REFLECTOR

S93 | DETECT AMPLITUDE DIFFERENCES AND PHASE DIFFERENCES AMONG RECEIVED SIGNALS OF ANTENNA ELEMENTS

S94 | CALCULATE CORRECTION COEFFICIENTS SO AS TO MINIMIZE AMPLITUDE DIFFERENCES AND PHASE DIFFERENCES

S95 | STORE CORRECTION COEFFICIENTS IN STORAGE DEVICE

END

## FIG. 23

```
                    ( RADAR DETECTION PROCESS )
                                 │
S101   │        READ CORRECTION COEFFICIENTS          │
       │           FROM STORAGE DEVICE                │
                                 │
S102   │    CORRECT PHASE SHIFTS OF PHASE SHIFTERS     │
       │        AND GAINS OF AMPLIFIERS USING          │
       │          CORRECTION COEFFICIENTS             │
                                 │
S103   │   TRANSMIT RADAR WAVE FROM RADAR DEVICE,      │
       │  AND RECEIVE, BY RADAR DEVICE, RADAR WAVE     │
       │      REFLECTED BY REFLECTING OBJECT           │
                                 │
S104   │  PERFORM FFT ON RECEIVED SIGNALS TO EXTRACT   │
       │ PEAKS OF RECEIVED SIGNALS IN FREQUENCY DOMAIN │
                                 │
S105   │      ESTIMATE DISTANCE FROM RADAR DEVICE TO    │
       │      REFLECTING OBJECT BASED ON FREQUENCY     │
       │      DIFFERENCE BETWEEN TRANSMITTED WAVE      │
       │              AND RECEIVED WA                  │
                                 │
S106   │      CALCULATE CORRELATION MATRIX BASED ON    │
       │ PEAKS OF RECEIVED SIGNALS IN FREQUENCY DOMAIN │
                                 │
S107   │   CALCULATE EVALUATION FUNCTION BASED ON      │
       │    CORRELATION MATRIX AND MODE VECTOR         │
                                 │
S108   │  ESTIMATE DIRECTION OF REFLECTING OBJECT      │
       │    WITH RESPECT TO RADAR DEVICE USING         │
       │           EVALUATION FUNCTION                 │
                                 │
                             ( END )
```

## FIG. 24

## FIG. 25

CALIBRATION PROCESS

S91 — DETECT THAT VEHICULAR APPARATUS STOPS AT STOP POSITION OF STATION APPARATUS

S92Aa — TRANSMIT TEST SIGNAL FROM TRANSMITTER

S92Ab — RECEIVE TEST SIGNAL BY RADAR DEVICE

S93 — DETECT AMPLITUDE DIFFERENCES AND PHASE DIFFERENCES AMONG RECEIVED SIGNALS OF ANTENNA ELEMENTS

S94 — CALCULATE CORRECTION COEFFICIENTS SO AS TO MINIMIZE AMPLITUDE DIFFERENCES AND PHASE DIFFERENCES

S95 — STORE CORRECTION COEFFICIENTS IN STORAGE DEVICE

END

## FIG. 26

## FIG. 27

CALIBRATION PROCESS

| | |
|---|---|
| S91 | DETECT THAT VEHICULAR APPARATUS STOPS AT STOP POSITION OF STATION APPARATUS |
| S2Ba | TRANSMIT REQUEST SIGNAL FROM RADAR DEVICE TO TRANSCEIVER |
| S2Bb | RECEIVE BY RADAR DEVICE, RESPONSE SIGNAL TRANSMITTED BY TRANSCEIVER |
| S93 | DETECT AMPLITUDE DIFFERENCES AND PHASE DIFFERENCES AMONG RECEIVED SIGNALS OF ANTENNA ELEMENTS |
| S94 | CALCULATE CORRECTION COEFFICIENTS SO AS TO MINIMIZE AMPLITUDE DIFFERENCES AND PHASE DIFFERENCES |
| S95 | STORE CORRECTION COEFFICIENTS IN STORAGE DEVICE |

END

*FIG. 28*

**EP 4 063 895 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8918302 B2
- US 2019204427 A
- EP 3502740 A1
- WO 2011101225 A
- CN 108945164 A
- JP 2014236641 A
- JP 2018059846 A